# EUROPEAN PATENT APPLICATION

(11) **EP 4 835 444 A1**
(43) Date of publication of application: **04.11.2026**
(21) Application number: 24912428.0
(22) Date of filing: 13.12.2024
(51) Int. Cl.: G01N 15/1429, G01N 15/14

(54) **BIOLOGICAL PARTICLE ANALYSIS SYSTEM, INFORMATION PROCESSING DEVICE, AND INFORMATION PROCESSING METHOD**

(30) Priority: 28.12.2023 JP 2023223112
(71) Applicant: Sony Group Corporation, Tokyo 108-0075 (JP)
(72) Inventor: YAMAMOTO, Shota, Tokyo 108-0075 (JP)
(74) Representative: D Young & Co LLP
(86) International application number: PCT/JP2024/044143
(87) International publication number: WO 2025/142539

(57) **Abstract**

According to the present disclosure, there is provided a biological particle analysis system including an acquisition unit that acquires measurement data measured from biologically derived particles included in a sample, a compression unit that performs data compression processing on the measurement data acquired by the acquisition unit, a gate unit that gates the measurement data compressed by the compression unit into training-use measurement data and validation-use measurement data and then adds a label to the training-use measurement data, a training unit that builds a learning model by using the training-use measurement data and the label, an estimation unit that inputs the validation-use measurement data to the learning model and outputs a confidence level of the validation-use measurement data, and a threshold value setting unit that sets, based on the confidence level, a threshold value that is used in sorting the sample.

## Description

### Technical Field

The present disclosure relates to a biological particle analysis system, an information processing device, and an information processing method.

### Background Art

Flow cytometers are commonly used in order to rapidly measure characteristics of a large number of particles in the field of medicine, biochemistry, or the like. A flow cytometer is a device that measures the characteristics of each particle by irradiating a flowing particle such as a cell or bead with a light beam and detecting fluorescence or the like emitted from the particle.

In addition, devices, each of which controls a destination of particles based on fluorescence information detected by a flow cytometer and thus sorts particles that emit specific fluorescence from a measurement sample, have been developed. Such a sorting device is also referred to as a cell sorter.

In recent years, it has been studied to increase the number of fluorescent substances that can be measured at a time in a flow cytometer and thus to enable more detailed analysis of particles. However, increasing the number of fluorescent substances increases the number of dimensions of measurement data, and thus analysis in the flow cytometer becomes more complicated.

Accordingly, various methods for analyzing measurement data in a flow cytometer have been studied. For example, the following PTL 1 discloses a technique for estimating shape information of a biologically derived target based on the peak position of a pulse waveform detected from the biologically derived target irradiated with a light beam.

### Citation List

### Patent Literature

PTL 1: JP 2017-58361 A

### Summary

### Technical Problem

On the other hand, a sorting device such as a cell sorter is required to perform a process of measuring and analyzing a flowing particle and determining whether to sort the particle based on the measurement and analysis results within a limited time during which the particle flows through the device.

Thus, a sorting device such as a cell sorter is required to determine whether a particle is a sorting target more quickly and in real time.

### Solution to Problem

According to a first disclosure, there is provided a biological particle analysis system including an acquisition unit that acquires measurement data measured from biologically derived particles included in a sample, a compression unit that performs data compression processing on the measurement data acquired by the acquisition unit, a gate unit that gates the measurement data compressed by the compression unit into training-use measurement data and validation-use measurement data and then adds a label to the training-use measurement data, a training unit that builds a learning model by using the training-use measurement data and the label, an estimation unit that inputs the validation-use measurement data to the learning model and outputs a confidence level of the validation-use measurement data, and a threshold value setting unit that sets, based on the confidence level, a threshold value that is used in sorting the sample.

### Brief Description of Drawings

[Fig. 1]

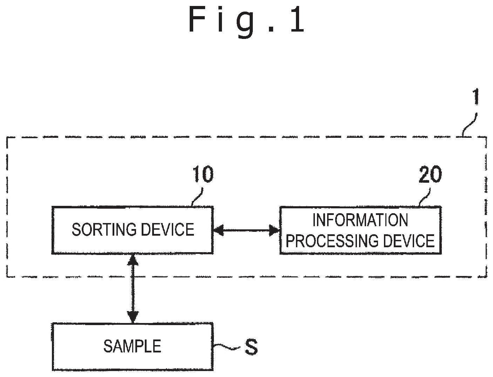

   Fig. 1 is a block diagram illustrating a configuration example of a biological particle analysis system according to an embodiment.
[Fig. 2]

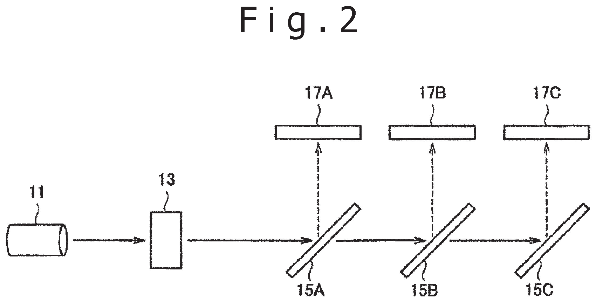

   Fig. 2 is an explanatory diagram for describing a filter-based detection mechanism of a measurement unit.
[Fig. 3]

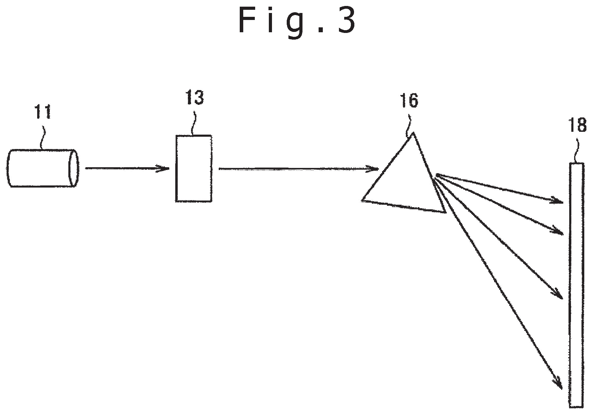

   Fig. 3 is an explanatory diagram for describing a spectrum-based detection mechanism of the measurement unit.
[Fig. 4]

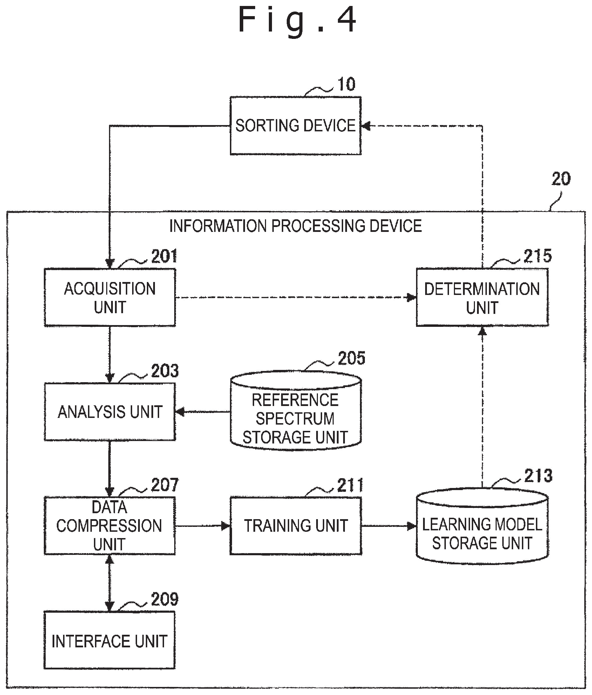

   Fig. 4 is a block diagram illustrating a configuration example of an information processing device according to the embodiment.
[Fig. 5]

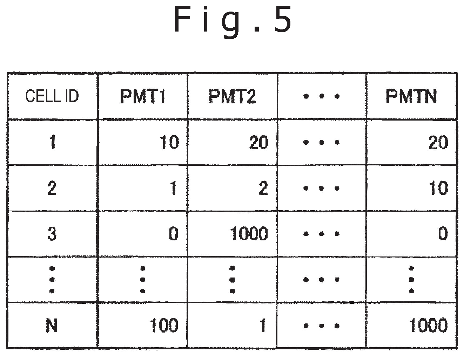

   Fig. 5 is a table showing an example of information related to fluorescence of biologically derived particles acquired from a sorting device.
[Fig. 6]

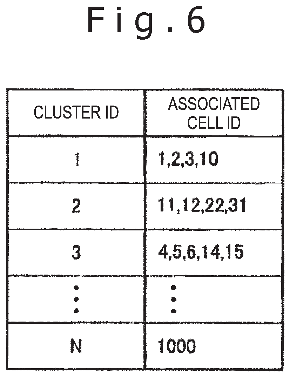

   FIG. 6 is an explanatory diagram illustrating a result of clustering processing.
[Fig. 7]

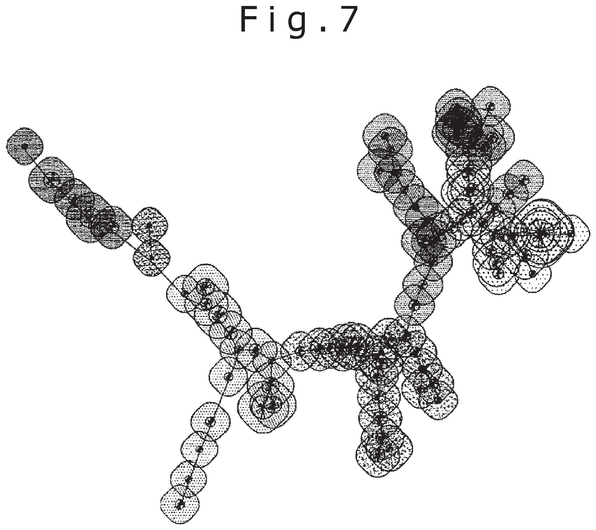

   Fig. 7 is an explanatory diagram illustrating a result of clustering processing.
[Fig. 8]

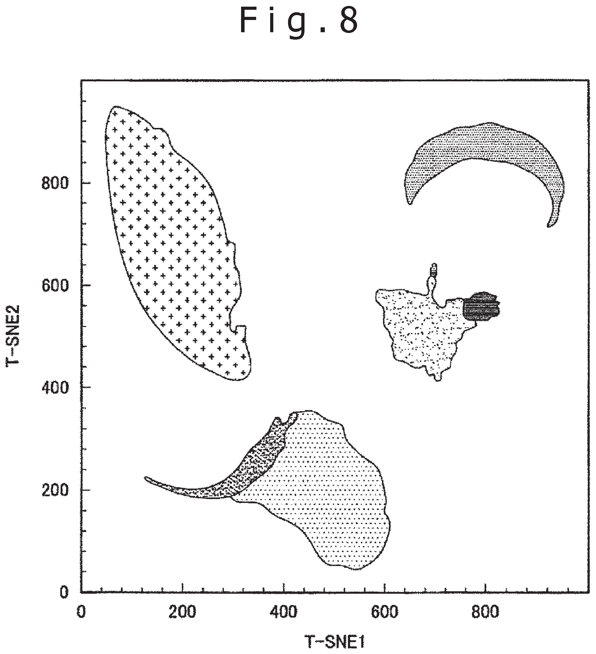

   Fig. 8 is an explanatory diagram illustrating a result of performing dimensionality reduction processing on information related to expression levels of fluorescent substances of biologically derived particles up to two dimensions by using t-SNE algorithm.
[Fig. 9]

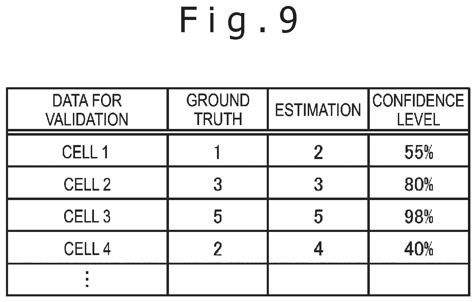

   Fig. 9 is a diagram illustrating data for validation according to a first embodiment.
[Fig. 10]

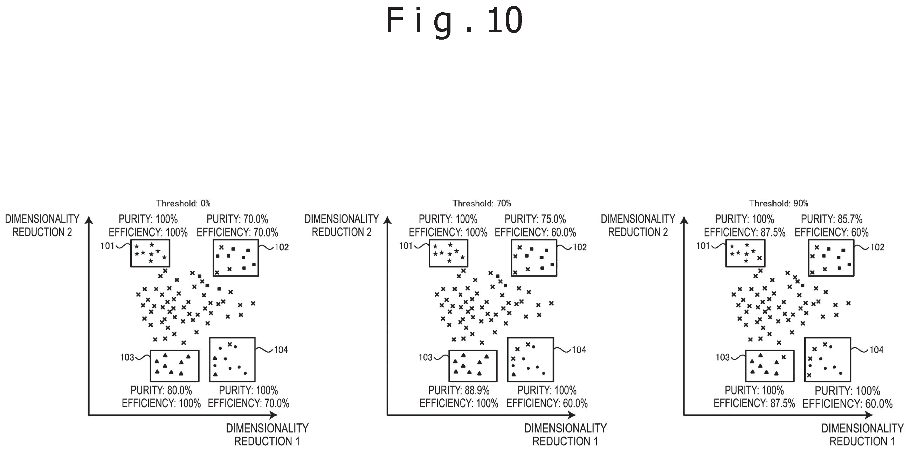

   Fig. 10 is a diagram illustrating screens each of which indicates the purities and efficiencies of measurement data subjected to dimensionality reduction according to the first embodiment.
[Fig. 11]

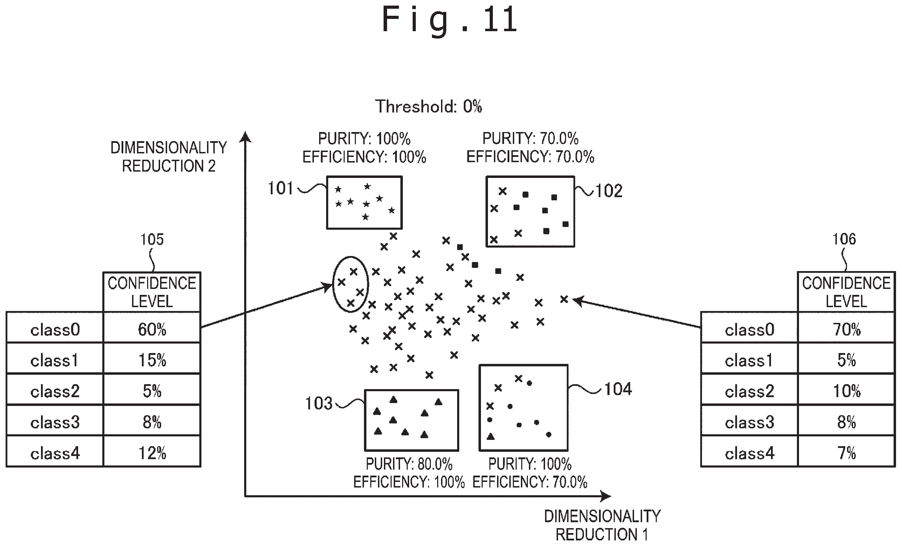

   Fig. 11 is a diagram illustrating classes and confidence levels of measurement data subjected to dimensionality reduction according to the first embodiment.
[Fig. 12]

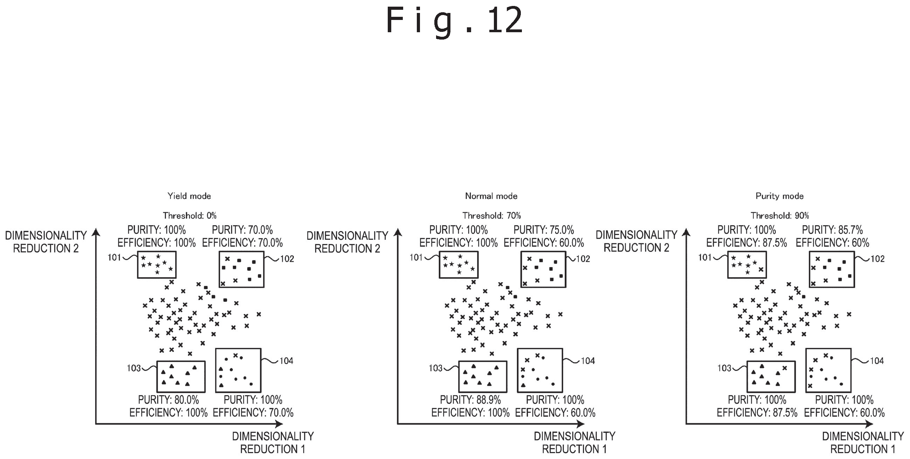

   Fig. 12 is a diagram illustrating screens each of which indicates relationships among modes, purities and efficiencies according to the first embodiment.
[Fig. 13]

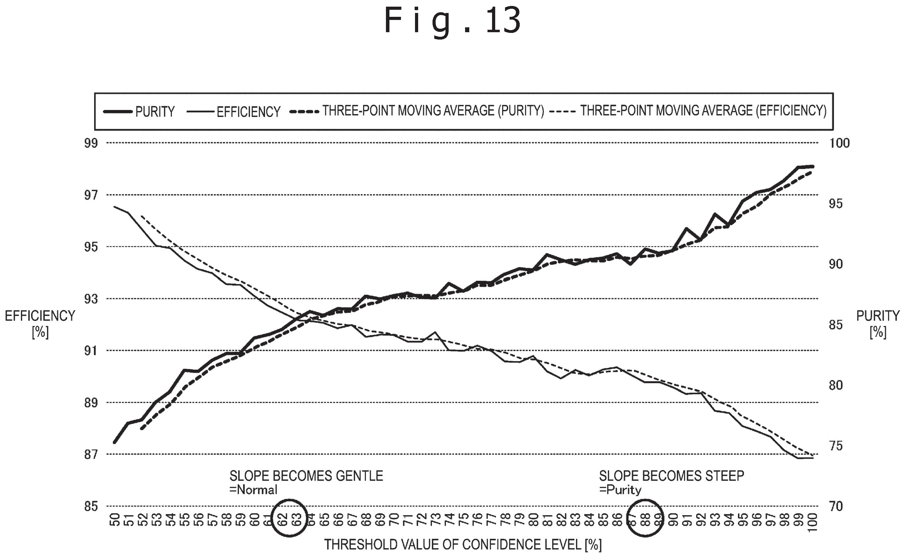

   Fig. 13 is a diagram for describing a case where a threshold value is set for each piece of measurement data according to the first embodiment.
[Fig. 14]

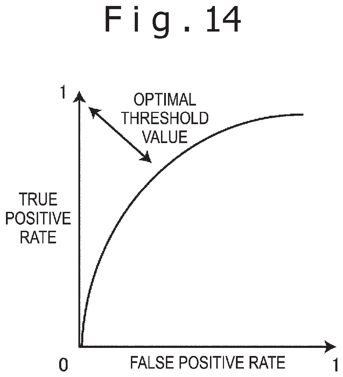

   Fig. 14 is a diagram for describing a case where a threshold value is set by using an ROC curve of measurement data for validation according to the first embodiment.
[Fig. 15]

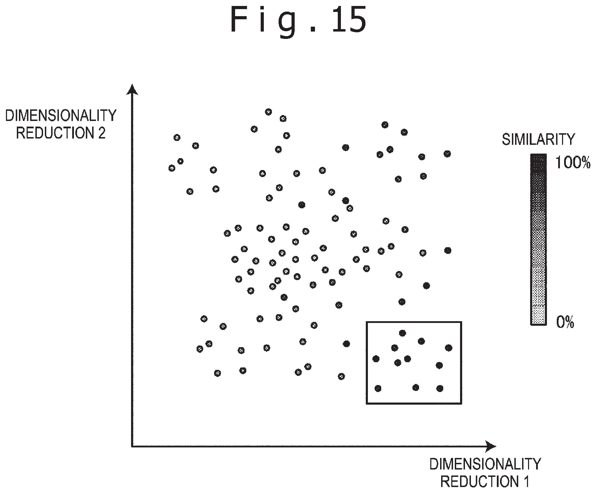

   Fig. 15 is a diagram illustrating a display example of measurement data subjected to dimensionality reduction according to the first embodiment.
[Fig. 16]

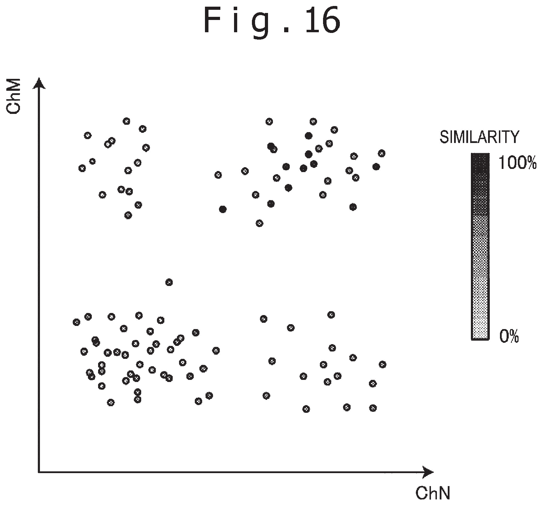

   Fig. 16 is a diagram illustrating a display example in which measurement data before fluorescence compensation of cells to be measured is displayed by differentiating colors according to similarities according to the first embodiment.
[Fig. 17]

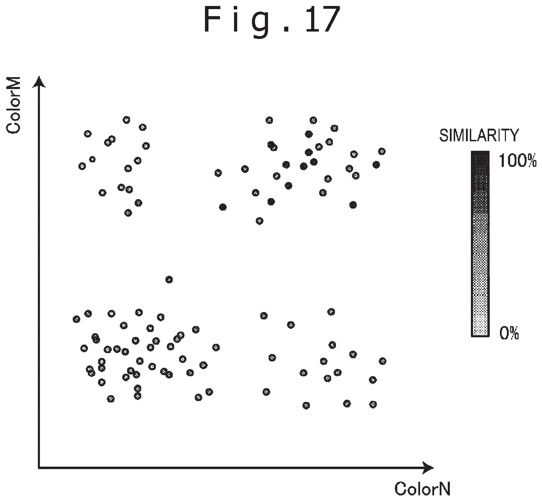

   Fig. 17 is a diagram illustrating a display example in which the measurement data after fluorescence compensation of cells to be measured is displayed by differentiating colors according to the similarities according to the first embodiment.
[Fig. 18]

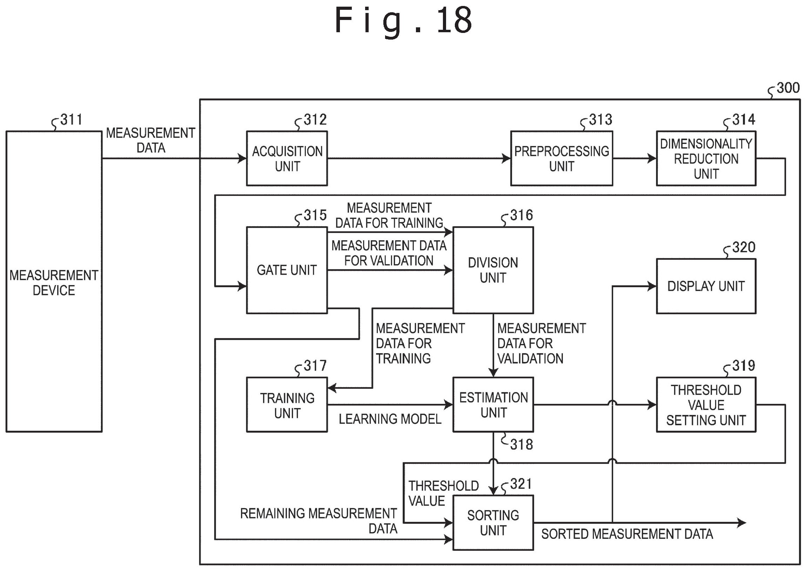

   Fig. 18 is a functional block diagram for sorting measurement data in deep learning of the information processing device according to the first embodiment.
[Fig. 19]

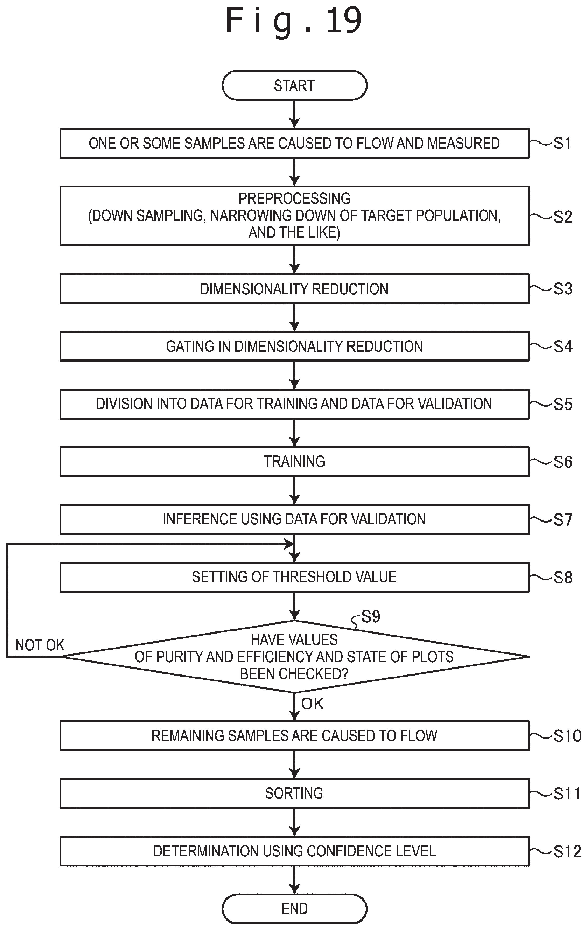

   Fig. 19 is a flowchart for describing sorting of measurement data in deep learning in the information processing device according to the first embodiment.
[Fig. 20]

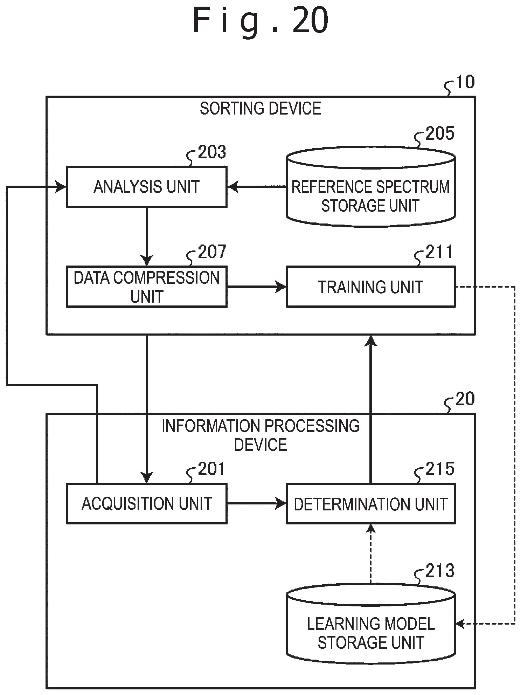

   Fig. 20 is a block diagram illustrating a configuration example of a biological particle analysis system according to a modification of the first embodiment.
[Fig. 21]

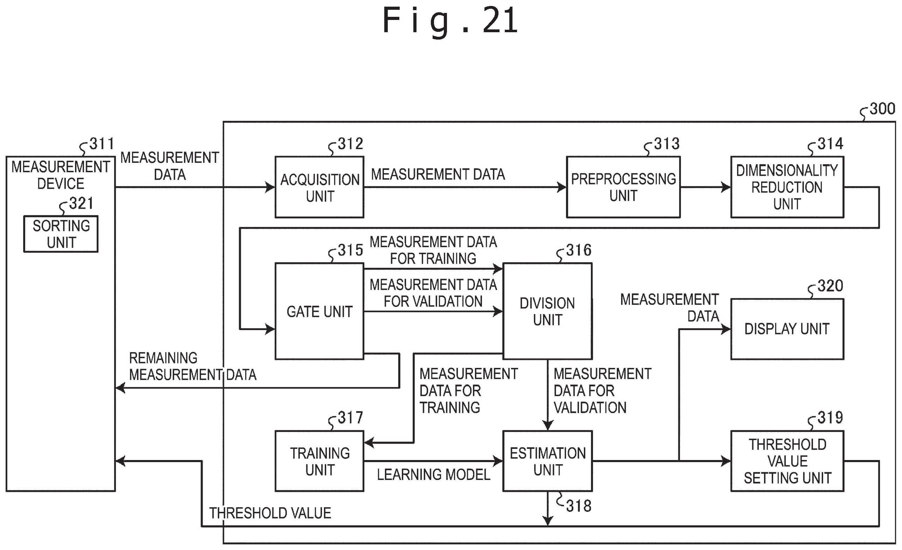

   Fig. 21 is a functional block diagram illustrating an information processing system according the modification of the first embodiment.
[Fig. 22]

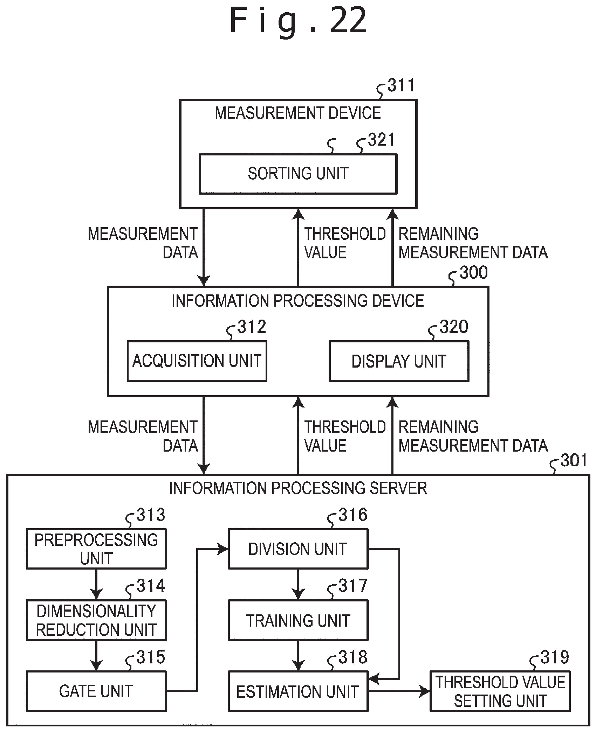

   Fig. 22 is a functional block diagram illustrating a modification of the information processing system according to the first embodiment.
[Fig. 23]

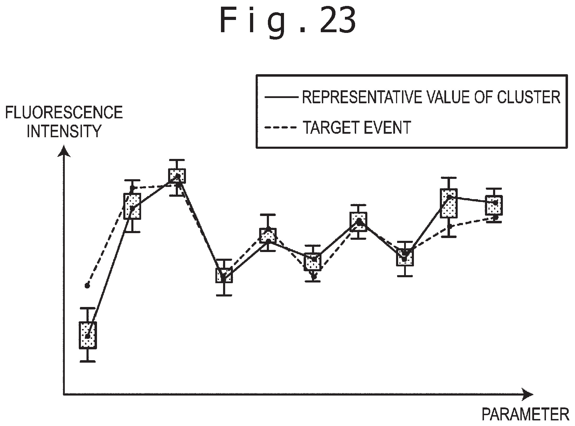

   Fig. 23 is a diagram for describing a concept of a threshold value of clustering-based sorting according to a second embodiment.
[Fig. 24]

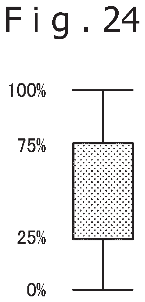

   Fig. 24 is a diagram for describing a concept of a range when a threshold value in clustering-based sorting according to the second embodiment is set to 50 %.
[Fig. 25]

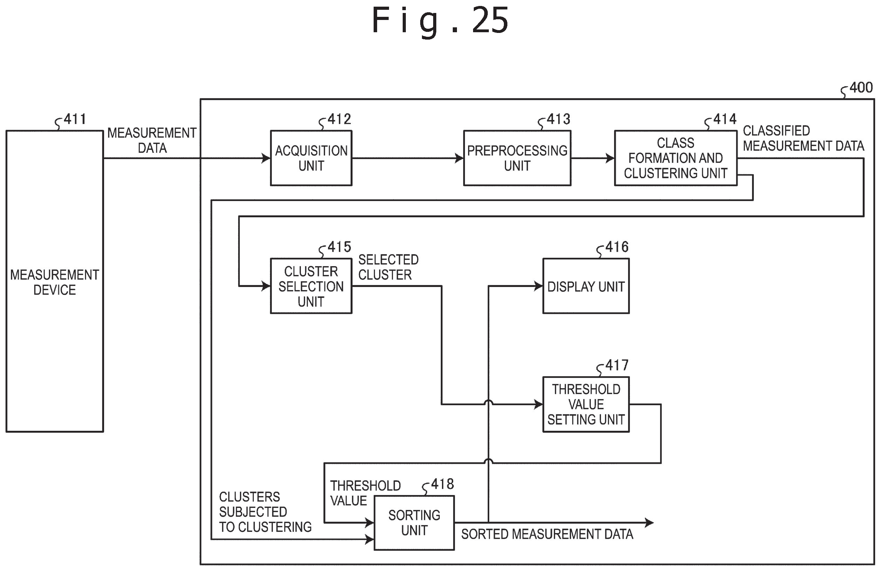

   Fig. 25 is a functional block diagram for clustering-based sorting of the information processing device according to the second embodiment.
[Fig. 26]

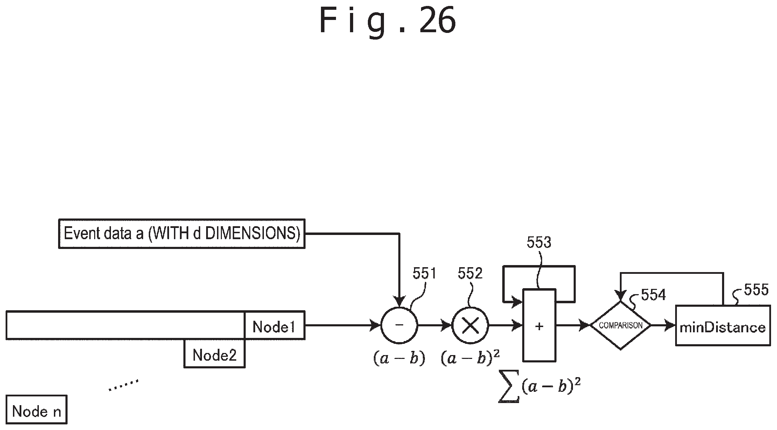

   Fig. 26 is a diagram illustrating a first example of a FlowSOM circuit according to the second embodiment.
[Fig. 27]

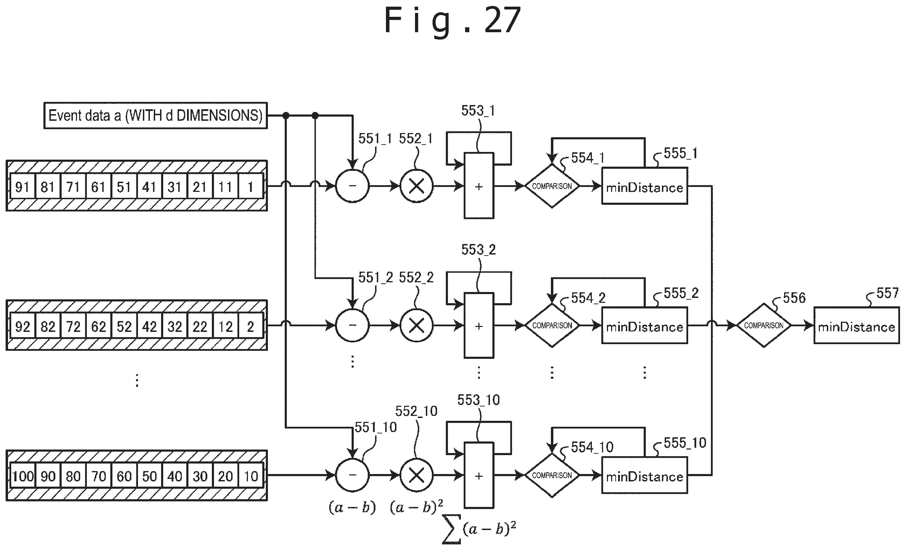

   Fig. 27 is a diagram illustrating a second example of a FlowSOM circuit according to the second embodiment.
[Fig. 28]

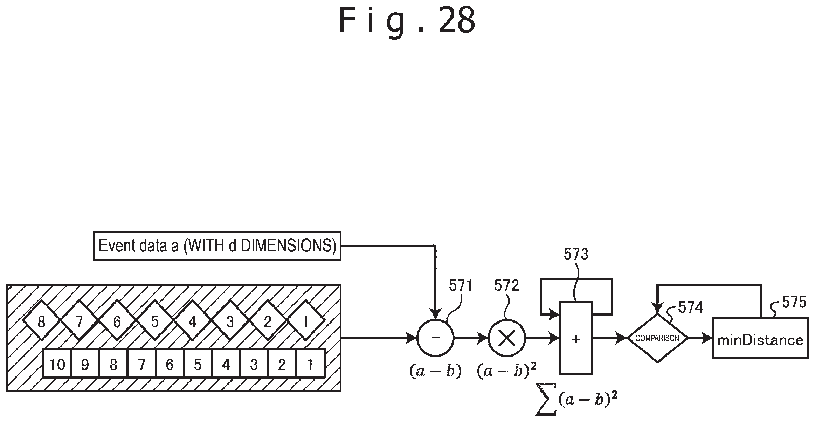

   Fig. 28 is a diagram illustrating a third example of a FlowSOM circuit according to the second embodiment.
[Fig. 29]

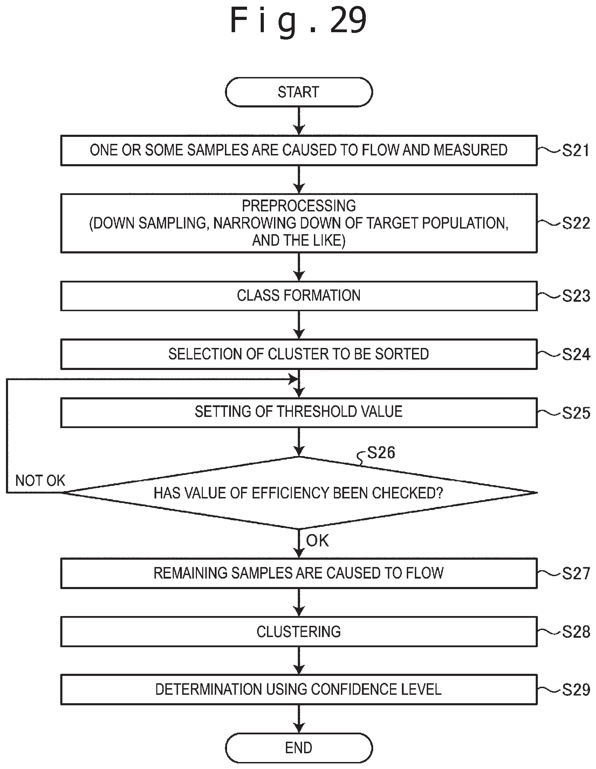

   Fig. 29 is a flowchart for describing clustering-based sorting of the information processing device according to the second embodiment.
[Fig. 30]

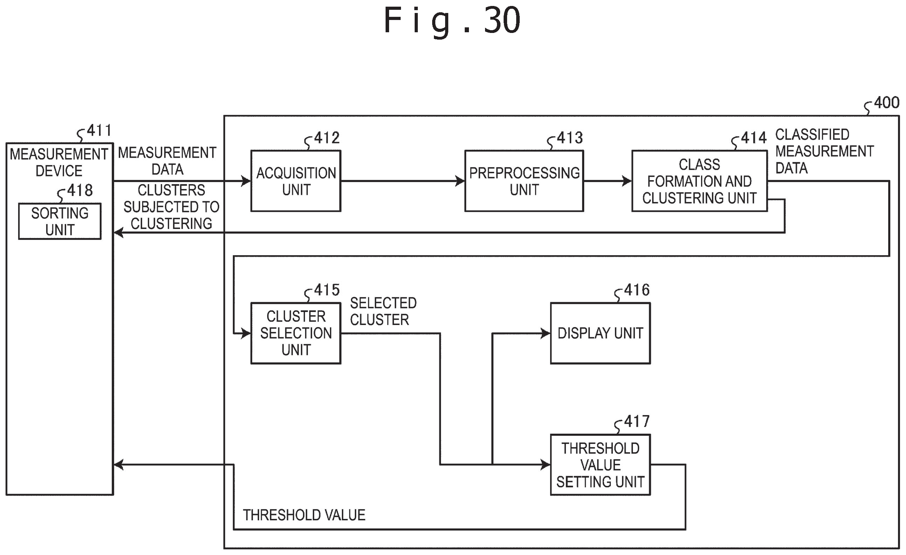

   Fig. 30 is a functional block diagram of an information processing system according to a modification of the second embodiment.
[Fig. 31]

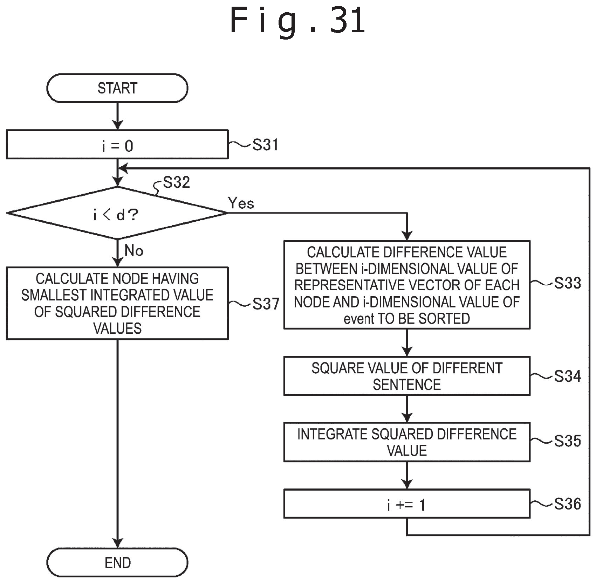

   Fig. 31 is a flowchart for describing an operation of the first example of the FlowSOM circuit according to the second embodiment.
[Fig. 32]

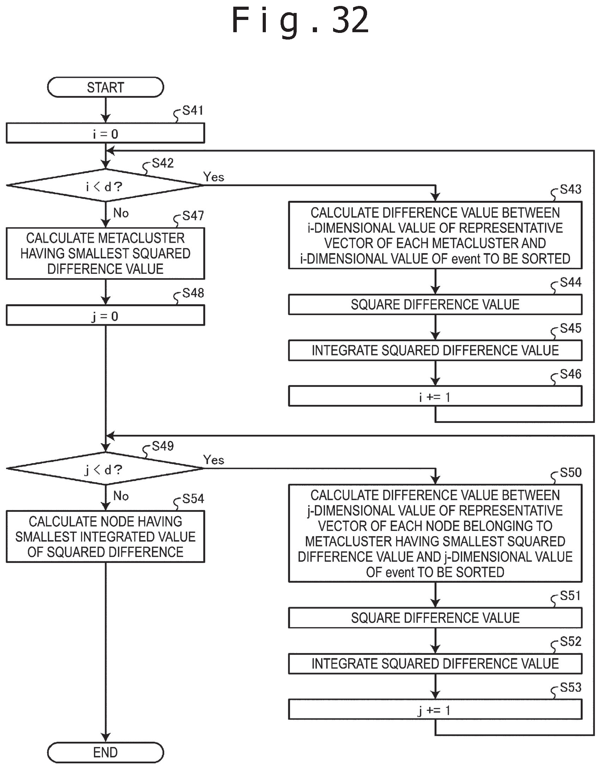

   Fig. 32 is a flowchart for describing an operation of the third example of the FlowSOM circuit according to the second embodiment.
[Fig. 33]

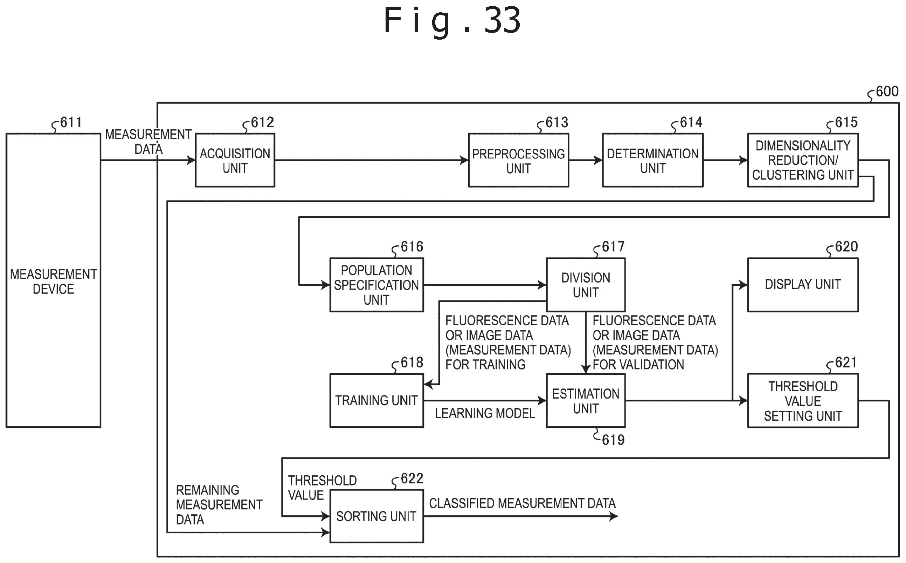

   Fig. 33 is a functional block diagram for IFCM-based sorting of an information processing device according to a third embodiment.
[Fig. 34]

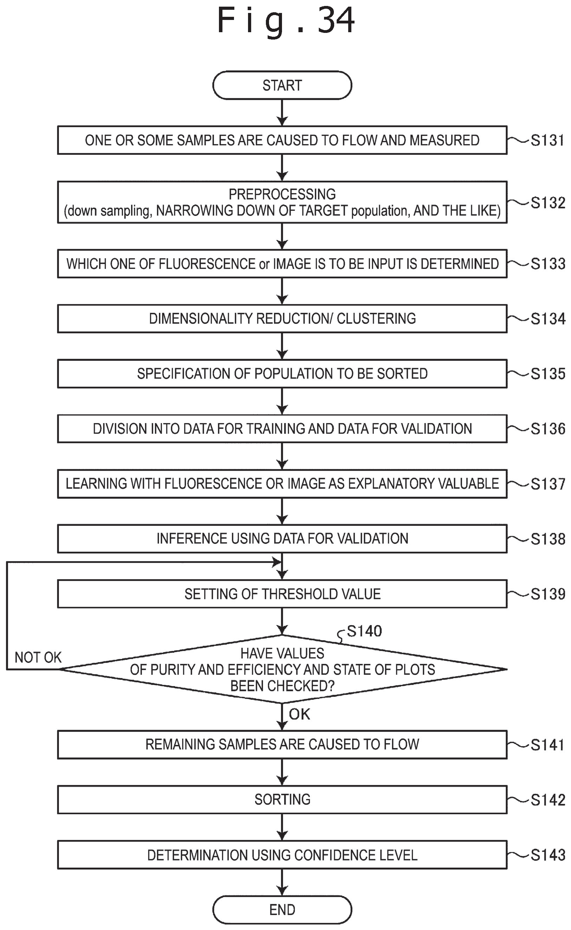

   Fig. 34 is a flowchart for describing IFCM-based sorting of the information processing device according to the third embodiment.
[Fig. 35]

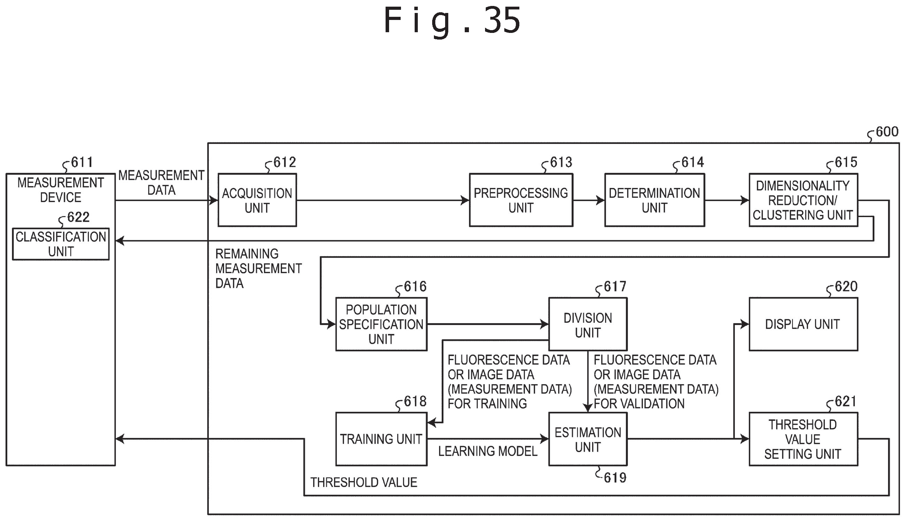

   Fig. 35 is a functional block diagram of an information processing system according to a modification of the third embodiment.
[Fig. 36]

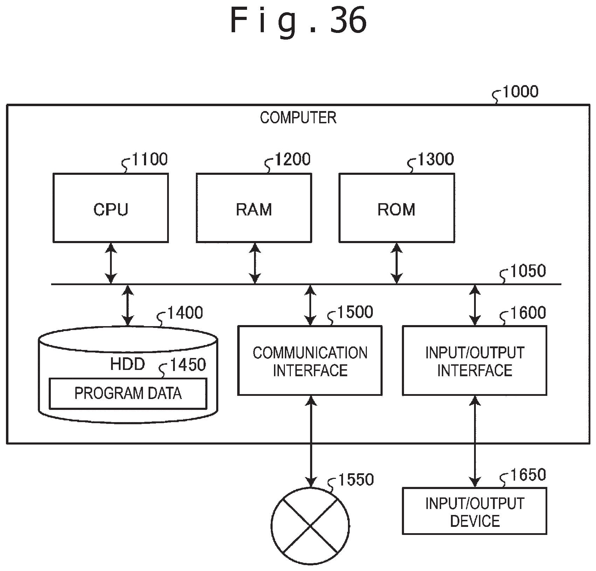

   Fig. 36 is a hardware configuration diagram illustrating an example of a computer that implements a computation device of the information processing device according to the embodiment.

### Description of Embodiments

Hereinafter, a preferred embodiment of the present disclosure will be described in detail with reference to the accompanying drawings. In the present specification and drawings, components having substantially the same functional configuration are denoted by the same reference numerals, and redundant description thereof is omitted. The description will be given in the following order.
0. Basic Concept
0.1. Configuration of Biological Particle Analysis System
0.2. Configuration of Information Processing Device
1. First Embodiment
1.1. Sorting Based on Confidence Levels
1.2. Use of Confidence Levels
1.3. Setting of Threshold Value
1.3.1. Threshold Value Setting Method 1
1.3.2. Threshold Value Setting Method 2
1.3.3. Threshold Value Setting Method 3
1.4. Visualization Using Similarities or Confidence Levels
1.5. Functional Block Diagram of Information Processing Device 300
1.6. Description of Operation
1.7. Modifications
2. Second Embodiment
2.1. Sorting (Clustering) Based on Confidence Levels
2.2. Threshold Value for Clustering-Based Sorting
2.2.1. Case of Determination Using Threshold Value for Each Parameter
2.2.2. Case of Determination Using Threshold Value by Averaging of All Parameters
2.3. Functional Block Diagram of Information Processing Device 400
2.4. FlowSOM Circuit
2.5. Description of Operation
2.6. Modifications
2.7. Flowchart for FlowSOM-Based Sorting
3. Third Embodiment
3.1. Sorting Based on Confidence Levels (Imaging Flow Cytometer)
3.2. Functional Block Diagram of Information Processing Device 600
3.3. Description of Operation
3.4. Modifications
4. Hardware Configuration

### 0. Basic Concept

In recent years, a method called machine learning-based sorting has been developed in which sorting target cells are sorted from a sample containing cells or the like based on measurement data (including, for example, the intensity of fluorescence emitted from labeled cells) by using machine learning. The basic concept of the machine learning-based sorting is disclosed in PTL 2, and the content of PTL 2 may be referred to in the present disclosure as appropriate.

PTL 2: JP 2020-193877 A

### 0.1. Configuration of Biological Particle Analysis System

A biological particle analysis system will be described.

First, a configuration of a biological particle analysis system 1 according to an embodiment will be described with reference to Fig. 1. Fig. 1 is a block diagram illustrating a configuration example of the biological particle analysis system 1 according to the embodiment.

As illustrated in Fig. 1, the biological particle analysis system 1 according to the present embodiment includes a sorting device 10 that acquires measurement data from a sample S and sorts particles to be sorted based on determination by an information processing device 20, and the information processing device 20 that analyzes the measurement data acquired by the sorting device 10 and determines whether the particles are sorting targets. The biological particle analysis system 1 can be used as, for example, a so-called cell sorter.

The sample S is, for example, biologically derived particles such as cells, microorganisms, or biologically relevant particles, and includes a plurality of populations of biologically derived particles. The sorting device 10 can analyze the measurement data of the sample S, thereby classifying the biologically derived particles into a plurality of populations including an internally bound population and an externally separated population, and sorting a specific classified population. The sample S may be, for example, cells such as animal cells (for example, blood cells) or plant cells, microorganisms such as bacteria such as Escherichia coli, viruses such as Tobacco mosaic virus, or fungi such as yeast, biologically relevant particles constituting cells such as chromosomes, liposomes, mitochondria, or various organelles (cell organelles), or biologically derived microparticles such as biologically relevant polymers such as nucleic acids, proteins, lipids, glycans, or complexes thereof.

Examples of the sample S include synthetic particles such as latex particles, gel particles, and industrial particles. The industrial particles may be, for example, organic or inorganic polymer materials and metals. Examples of the organic polymer materials include polystyrene, styrene-divinylbenzene, and polymethyl methacrylate. Examples of the inorganic polymer materials include glass, silica, and magnetic materials. Examples of the metals include gold colloid and aluminum. The shape of each microparticle may be spherical, or may be non-spherical. The microparticle may include a cavity and may be configured to capture a biologically derived particle in the cavity. The size and mass of each microparticle may be appropriately selected by those skilled in the art, and are not particularly limited.

Here, the sample S is labeled (stained) with one or more fluorescent dyes. The sample S with the fluorescent dye can be labeled by a known method. For example, when the sample S includes cells, fluorescently labeled antibodies each of which selectively binds to an antigen being present on a surface of a cell are mixed with cells to be measured, and each fluorescently labeled antibody is bound to an antigen on the surface of the cell, and thus the cells to be measured can be labeled with the fluorescent dye.

The fluorescently labeled antibody is an antibody to which the fluorescent dye is bound as a label. Specifically, the fluorescently labeled antibody may be obtained by binding, to a biotinylated antibody, the fluorescent dye to which avidin is bound by an avidin-biotin reaction. Alternatively, the fluorescently labeled antibody may be an antibody to which the fluorescent dye is directly bound. Note that the antibody may be either a polyclonal antibody or a monoclonal antibody. Further, the fluorescent dye for labeling cells is not particularly limited, and at least one or more known dyes that are used for staining cells and the like can be used.

The sorting device 10 includes a measurement unit and a sorting unit. The sorting device 10 may be a so-called flow cell type sorting device 10 or a microfluidic chip type sorting device.

The measurement unit measures fluorescence emitted from the sample S by irradiating the sample S with a light beam such as laser light. Specifically, the measurement unit aligns the sample S in one direction by forming a sheath liquid in which the sample S is dispersed into a laminar flow. At this time, the measurement unit irradiates the aligned sample S with laser light having a wavelength capable of exciting the fluorescent dye that labels the sample S, and photoelectrically converts fluorescence generated from the sample S irradiated with the laser light by a known photoelectric conversion element such as a charge coupled device (CCD), a complementary metal oxide semiconductor (CMOS), a photodiode, or a photo multiplier tube (PMT). This allows the measurement unit to acquire fluorescence from the sample S.

The detection mechanism of the fluorescence from the sample S in the measurement unit may be either a filter-based system or a spectrum-based system. Here, the detection mechanism of the fluorescence from the sample S will be described with reference to Fig. 2 and Fig. 3. Fig. 2 is an explanatory diagram for describing a filter-based detection mechanism, and Fig. 3 is an explanatory diagram for describing a spectrum-based detection mechanism.

As illustrated in Fig. 2, fluorescence obtained by irradiating the sample S flowing through a flow path 13 with a light beam from a light source 11 is spectrally separated by dichroic mirrors 15A, 15B, and 15C in the filter-based detection mechanism. Thus, the filter-based detection mechanism can acquire the intensity of the fluorescence for each of the predetermined wavelength bands at photodetectors 17A, 17B, and 17C.

In particular, each of the dichroic mirrors 15A, 15B, and 15C is a mirror that reflects light in a specific wavelength band and transmits light in the other wavelength bands. This allows the measurement unit to spectrally separate the fluorescence into light of the respective wavelength bands by providing the dichroic mirrors 15A, 15B, and 15C that reflect light in the wavelength bands different from each other on the optical path of the fluorescence from the sample S. For example, the measurement unit can spectrally separate the fluorescence from the sample S into light of the respective wavelength bands by providing the dichroic mirror 15A that reflects light in a red wavelength band, the dichroic mirror 15B that reflects light in a green wavelength band, and the dichroic mirror 15C that reflects light in a blue wavelength band in order from a side on which the fluorescence from the sample S is incident.

Fluorescence obtained by irradiating the sample S passing through the flow path 13 with a light beam from the light source 11 is spectrally separated by a prism 16 in the spectrum-based detection mechanism, as illustrated in Fig. 3. This allows the spectrum-based detection mechanism to acquire a continuous fluorescence spectrum at a photodetector array 18.

Specifically, the prism 16 is an optical member that disperses incident light. This allows the measurement unit to detect a continuous spectrum of fluorescence at the photodetector array 18 in which a plurality of photoelectric conversion elements are disposed in an array by dispersing the fluorescence from the sample S by the prism 16.

The sorting unit sorts a part of the sample S to be sorted. Specifically, first, the sorting unit generates droplets of the sample S and charges droplets of the sample S to be sorted. The sorting unit then moves the generated droplets into an electric field generated by deflection plates. At this time, the charged droplets are attracted to a polarizing plate side on which the electric field has been generated, and thus the movement direction of the droplets is changed. This allows the sorting unit to separate the droplets of the sample S to be sorted and the droplets of the sample S not to be sorted, thereby enabling sorting of the biologically derived particles to be sorted. Note that the sorting method of the sorting unit may be either a jet-in-air method or a cuvette flow cell method. In addition, the sample S may be sorted by being ejected to the outside of a flow cell or a micro flow path chip, or may be sorted inside the micro flow path chip. Whether to sort the sample S may be determined by a logic circuit (for example, a field-programmable gate array (FPGA) circuit) included in the sorting device 10, or may be determined by an instruction from the information processing device 20.

The information processing device 20 analyzes the measurement data of the sample S acquired by the measurement unit, and presents the analyzed data to a user. The user can specify a population of the biologically derived particles to be sorted by checking the data analyzed by the information processing device 20.

### 0.2. Configuration of Information Processing Device

Next, a more specific configuration of the information processing device 20 included in the biological particle analysis system 1 according to the present embodiment will be described with reference to Fig. 4. Fig. 4 is a block diagram illustrating a configuration example of the information processing device 20 according to the present embodiment.

The information processing device 20 includes an acquisition unit 201, an analysis unit 203, a reference spectrum storage unit 205, a data compression processing unit 207, an interface unit 209, a training unit 211, a learning model storage unit 213, and a determination unit 215, as illustrated in Fig. 4.

The acquisition unit 201 acquires information related to fluorescence of biologically derived particles from the sorting device 10. Specifically, the sorting device 10 detects light of the biologically derived particles by the spectrum-based detection mechanism, and the acquisition unit 201 acquires information related to the spectrum of the light of the biologically derived particles. The light of the biologically derived particles may be either scattered light or fluorescence from the biologically derived particles irradiated with laser light, or may be both thereof. The acquisition unit 201 may acquire the information related to the light of the biologically derived particles from the sorting device 10 via a network or the like, or may acquire the information related to the light of the biologically derived particles from the sorting device 10 via a wired or wireless local area network (LAN) or a wired cable.

For example, the information related to the light of the biologically derived particles acquired by the acquisition unit 201 may be information as illustrated in Fig. 5. Fig. 5 is a table showing an example of the information related to the light of the biologically derived particles acquired from the sorting device 10.

The information related to the light of the biologically derived particles may indicate, for each identification number of the cells (that is, the biologically derived particles), gains detected by respective N photo multiplier tubes (PMTs) disposed in the photodetector array as "PMT1" to "PMTN", as illustrated in Fig. 5. The N photo multiplier tubes are disposed in an array in a line in a dispersing direction of light by the prism. This allows the spectrum of the light of the cells to be acquired by continuously arranging the gains of the N photo multiplier tubes as a histogram. Fig. 5 illustrates the measurement results of the gains of the N photo multiplier tubes for each of the N cells.

The analysis unit 203 derives information related to characteristics of the biologically derived particles by analyzing the information related to the light of the biologically derived particles measured by the sorting device 10. Specifically, the analysis unit 203 separates respective fluorescence components included in the fluorescence spectrum measured by the sorting device 10, thereby deriving an expression level of a fluorescent substance corresponding to each of the fluorescence components in the biologically derived particles.

The biologically derived particles to be measured are labeled with a plurality of fluorescent substances that emit fluorescence having wavelength distributions overlapping each other. This allows the analysis unit 203 to derive the expression level of each fluorescent substance by weighting and fitting the wavelength distribution of the fluorescence emitted from each fluorescent substance to the fluorescence spectrum measured by the sorting device 10.

More specifically, first, the analysis unit 203 acquires, from the reference spectrum storage unit 205, the reference spectrum indicating the wavelength distribution of fluorescence emitted by each of the fluorescent substances labeling the biologically derived particles. Next, the analysis unit 203 can estimate the expression level of each fluorescent substance by superimposing the reference spectra of the respective fluorescent substances and fitting the superimposed reference spectra to the fluorescence spectrum measured by the sorting device 10 by using a weighted least squares method.

The reference spectrum storage unit 205 stores the reference spectrum indicating the wavelength distribution of fluorescence emitted by each of the fluorescent substances capable of labeling the biologically derived particles. The reference spectrum storage unit 205 may be provided in either the information processing device 20 or the sorting device 10, or may be provided in another information processing device or an information processing server that can communicate via a network.

The data compression processing unit 207 performs data compression processing on optical information of the biologically derived particles analyzed by the analysis unit 203.

The data compression processing includes both non-linear processing and linear processing. For example, the non-linear processing may include dimensionality reduction processing, clustering processing, or grouping processing. For example, the linear processing may include processing of generating fluorescence information for each fluorescent dye from the spectrum information of the light of the biologically derived particles by performing fluorescence separation.

Note that any algorithm of supervised or unsupervised machine learning or weakly supervised machine learning may be used for the non-linear processing. However, it is desirable that a machine learning algorithm to be used for the non-linear processing be different from a machine learning algorithm to be used in the training unit 211, which will be described below.

Specifically, the data compression processing unit 207 may perform clustering processing on the information related to the expression levels of the respective fluorescent substances of the biologically derived particles. This allows the data compression processing unit 207 to classify the biologically derived particles into a plurality of populations obtained by external separation and internal binding.

An algorithm of the clustering processing is not particularly limited, and a known clustering algorithm can be used. For example, the data compression processing unit 207 may perform the clustering processing by using an algorithm that can specify the number of clusters, such as a k-means algorithm, or may perform the clustering processing by using an algorithm that automatically determines the number of clusters, such as a FlowSOM algorithm.

The results of the clustering processing by the data compression processing unit 207 may be presented to a user in a format as illustrated in Fig. 6 and Fig. 7. Fig. 6 and Fig. 7 are explanatory diagrams illustrating the results of the clustering processing.

For example, the clustering results by the data compression processing unit 207 may be presented to the user in a table format as illustrated in Fig. 6.

A population of 1000 cells (that is, biologically derived particles) is divided into N clusters, and the cells belonging to the respective clusters are indicated by an identification number assigned to each of the clusters and the cells in Fig. 6. Specifically, cells with identification numbers "1", "2", "3", and "10" belong to a cluster with an identification number "1", cells with identification numbers "11", "12", "22", and "31" belong to a cluster with an identification number "2", cells with identification numbers "4" to "6", "14", and "15" belong to a cluster with an identification number "3", and a cell with an identification number "1000" belongs to a cluster with an identification number "N" in Fig. 6. The presentation to the user in such a table format can simply indicate the cells belonging to each cluster.

For example, the clustering results by the data compression processing unit 207 may be presented to the user in a minimum spanning tree format, as illustrated in Fig. 7.

Radar charts colored in a plurality of colors (colors are distinguished by the types of hatching in Fig. 7) are arrayed in a tree shape in which the radar charts are connected to each other in Fig. 7. Each radar chart represents a corresponding one of the cells (that is, a biologically derived particle). Specifically, the distribution and the size of each radar chart represent a vector corresponding to the expression level of a corresponding one of the fluorescent substances of the cells. Here, the regions colored with different colors represent clusters to which the respective cells belong. For example, cells illustrated in radar charts that are colored with the same color (that is, the same type of hatching) represent that the cells belong to the same cluster.

Further, a distance between the radar charts corresponds to a similarity between the cells represented by the radar charts in Fig. 7. That is, Fig. 7 illustrates that cells represented by radar charts close to each other are similar to each other, and cells represented by radar charts far from each other are not similar to each other. The presentation to the user in such a minimum spanning tree format, as described above, enables the illustration of a similarity relation between the cells in addition to the cells belonging to the clusters.

Alternatively, the data compression processing unit 207 may perform the dimensionality reduction processing on the information related to the expression levels of the respective fluorescent substances of the biologically derived particles. This allows the data compression processing unit 207 to visualize a relation between respective pieces of high-dimensional data on a low-dimensional map in an easily understandable manner by reducing the dimensions of the high-dimensional data including the expression levels of a plurality of fluorescent substances. Thus, the user can more easily classify the biologically derived particles into a plurality of populations by checking the low-dimensional information after the dimensionality reduction processing, instead of the high-dimensional information before the dimensionality reduction processing. The data compression processing unit 207 may perform the dimensionality reduction processing of reducing dimensionality by at least one or more dimensions, but for example, the dimensionality of the information related to the expression levels of the respective fluorescent substances of the biologically derived particles is reduced to three or less dimensions, thereby enabling the relationship between the respective pieces of the high-dimensional data to be more clearly visualized.

An algorithm of the dimensionality reduction processing is not particularly limited, and a known dimensionality reduction algorithm can be used. For example, the data compression processing unit 207 may perform the dimensionality reduction processing by using an algorithm such as PCA, t-SNE, or Umap.

The result of the dimensionality reduction processing by the data compression processing unit 207 may be presented to the user in a format as illustrated in Fig. 8. Fig. 8 is an explanatory diagram illustrating a result of performing dimensionality reduction processing to two dimensions on the information related to the expression levels of the respective fluorescent substances of the biologically derived particles by using the t-SNE algorithm.

For example, Euclidean distances of high-dimensional data, which is the expression levels of the fluorescent substances of the cells, are converted into probabilities by using a probability distribution of the Student's t-distribution, and are mapped on two-dimensional coordinates in Fig. 8. This allows the user to compare the similarities of the expression levels of the respective fluorescent substances of the cells in a more simplified manner without comparing the expression levels of the respective fluorescent substances. For example, cells belonging to the same population are represented in different colors in Fig. 8. It can be seen with reference to Fig. 8 that the cells belonging to the same population are grouped by appropriate external separation and internal binding in the dimensionality reduction processing.

The interface unit 209 includes an output device and an input device, and inputs and outputs information from and to the user. Specifically, the interface unit 209 may present information after the non-linear processing by the data compression processing unit 207 to the user by using a cathode ray tube (CRT) display device, a liquid crystal display device, an organic light emitting diode (OLED) display device, or the like. The interface unit 209 may also receive, from the user, an input for specifying the biologically derived particles to be sorted, by using the input device such as a touch panel, a keyboard, a mouse, a button, a microphone, a switch, or a lever.

The user can more easily designate a population of the biologically derived particles to be sorted by checking the information after the data compression processing output from the interface unit 209. For example, the user can specify a cluster of the biologically derived particles to be sorted by checking information after the clustering processing. Alternatively, the user can designate a population range of the biologically derived particles to be sorted by checking information after the dimensionality reduction processing.

Building of a learning model to be performed by the training unit 211 will be described below.

A built learning model may be stored in, for example, the learning model storage unit 213 included in the information processing device 20. This allows the sorting device 10 to sort the biologically derived particles to be sorted in accordance with the sorting control by the information processing device 20. Alternatively, the built learning model may be implemented in a logic circuit such as an FPGA circuit provided in the sorting device 10. For example, the sorting device 10 may be provided with the determination unit 215, and the FPGA circuit provided in the sorting device 10 may be implemented with logic, which has been designed based on the type of the determination unit 215, for executing the built learning model. The training unit 211 may design the logic for executing the built learning model.

The algorithm of the machine learning to be performed by the training unit 211 is supervised learning in which information related to a fluorescence spectrum of biologically derived particles specified as a sorting target is used as a teacher. For example, the training unit 211 may build a learning model by using a machine learning algorithm such as random forest, support vector machine, or deep learning.

The biological particle analysis system 1 according to the present embodiment uses, as the teacher, various pieces of information that are not standardized, and thus a random forest machine learning algorithm that does not need to be standardized can be suitably used. In addition, the random forest machine learning algorithm can be suitably used for the biological particle analysis system 1 according to the present embodiment that is essentially required to quickly determine whether the biologically derived particles are the sorting targets, because the learning model thereof is easily implemented using hardware.

Note that the training unit 211 may determine whether a learning model that can sufficiently determine the sorting target has been built, and notify the user of the determination result. For example, when the number of pieces of information related to the biologically derived particles that have been used for training or a rate of the pieces of information that have been used for training to all information exceeds a threshold value, the training unit 211 may notify the user of the fact that the learning model capable of sufficiently determining the sorting target has been built.

In addition, when an accuracy of the learning model exceeds a threshold value, the training unit 211 may notify the user of the fact that the learning model capable of sufficiently determining the sorting target has been built. The accuracy of the learning model can be determined by, for example, N-fold-cross validation. Specifically, the entire information to be used as the teacher is divided into N pieces, and the learning model is built by performing learning using the information included in N-1 pieces of the divided information, and then the information included in the remaining one piece of the divided information is determined, so that the accuracy of the built learning model can be determined.

The learning model storage unit 213 stores the learning model built by the training unit 211. The learning model storage unit 213 may store the learning model as hardware using a field-programmable gate array (FPGA) circuit or the like. This enables the determination of whether the biologically derived particles are the sorting targets at a higher speed.

The determination unit 215 determines whether the biologically derived particles emitting fluorescence measured by the sorting device 10 are the sorting targets, based on the learning model stored in the learning model storage unit 213. When the biologically derived particle is determined to be the sorting target, the determination unit 215 instructs the sorting device 10 to sort the biologically derived particle.

Note that the learning model storage unit 213 and the determination unit 215 may be provided in the sorting device 10.

In addition, when the sorting device 10 can separately sort a plurality of populations of biologically derived particles, the determination unit 215 may instruct the sorting device 10 not only whether a biologically derived particle is the sorting target but also which collection unit the biologically derived particle is collected in. The training unit 211 performs machine learning by using, as teacher data, information related to the fluorescence spectrum of the biologically derived particle for which the collection unit is further specified after sorting. This allows the determination unit 215 to output, to the sorting device 10, an instruction to separately sort a plurality of populations of biologically derived particles.

As described above, the biologically derived particles are sorted according to the determination of the determination unit 215 in the sorting based on the machine learning. Since the determination result having the highest confidence level is output in the sorting based on the machine learning, even when the confidence level is low, if the confidence level is higher than the other determination results, sorting of the target particle may be performed. This is not preferable when higher purity of measurement data (the confidence level with respect to a ground truth) is required.

The biological particle analysis system according to the information of the embodiment inputs cell information to a machine learning model, performs determination for sorting, and then further performs determination for sorting on a particle determined to be sorted based on a threshold value. Hereinafter, an embodiment of a biological particle analysis system will be described.

### 1. First Embodiment

### 1.1. Sorting Based on Confidence Levels

Whether sorting is possible is determined based on past tendencies (training data) in sorting based on the machine learning, which typically involves ambiguity.

In addition, when a Softmax function is adopted for an output layer in deep learning, calculation is performed such that the sum of confidence levels in a case of sorting into respective classes is 100 %.

When sorting is performed into the class determined with the highest probability without setting a threshold value, even if an event occurs in which class 0 = 20 %, class 1 = 40 %, class 2 = 30 %, and class 3 = 10 % are determined, sorting is performed into the class 1 with the highest probability. However, when a user wants to increase the purity (confidence level), sorting in the case described above needs to be a non-sorting target because the probability of the class 1 is as low as 40 %. In this case, sorting efficiency is reduced. Here, the "class" indicates a category or a group of data.

Thus, a threshold value is provided in order to sort only an event with a high confidence level in the embodiment. Note that the threshold value may be variably set and may be adjusted according to the intention of a user.

### 1.2. Use of Confidence Levels

A confidence level in deep learning in a first embodiment is used in the following operation. Here, the "confidence level" is a probability that an estimation result in the deep learning is correct.

Step 1: First, a part of a sample is caused to flow and dimensionality reduction is performed.

Step 2: A population range of biological particles to be sorted is designated (gated) from the dimensionality reduction result.

Step 3: The part of the sample subjected to the dimensionality reduction is divided into data for training and data for validation.

Step 4: The threshold value is changed using the data for validation after training, and then, fluctuations in purity and efficiency are checked.

Note that, the data for training and the data for validation are collectively subjected to the dimensionality reduction and the gating in the above operation, but as long as the dimensionality reduction algorithm can maintain reproducibility even for newly added data, the dimensionality reduction and the gating may be performed only on the data for training, and then the data for validation may be newly added to the dimensionality reduction result to attach a ground-truth label. The "label" indicates a class that each piece of data belongs.

Fig. 9 is a diagram illustrating data for validation according to the first embodiment. Events of a cell 1, a cell 2, a cell 3, a cell 4, ... are present as the data for validation, and "ground truth", "estimation", and "confidence level" are associated with each event, as illustrated in Fig. 9. Data of "ground truth" is attached in gating processing, which will be described below, and data of "estimation" and data of "confidence level" are attached in inference processing using the data for validation. Here, the "ground truth" indicates a class in which a cell is to be actually included. The "estimation" indicates a class estimated in the machine learning.

The event of "cell 1" is associated with a class in which "ground truth" is "1", a class in which "estimation" is "2", and 55 % of "confidence level". The event of "cell 2" is associated with a class in which "ground truth" is "3", a class in which "estimation" is "3", and 80 % of "confidence level". The event of "cell 3" is associated with a class in which "ground truth" is "5", a class in which "estimation" is "5", and 98 % of "confidence level". The class of "cell 4" is associated with a class in which "ground truth" is "2", a class in which "estimation" is "4", and 40 % of "confidence level".

For example, when the threshold value is set to 60 % in Fig. 9, the events of "cell 1" and "cell 4" are not sorted, and thus, the purity can be increased. However, when the threshold value is set too high such as 90 %, the probability of regarding even a correctly estimated event as a non-sorting target increases, and thus, the efficiency of acquiring events decreases.

Fig. 10 is a diagram illustrating a screen indicating purities and efficiencies (yields) of measurement data subjected to dimensionality reduction according to the first embodiment. The screen displays the purity and efficiency corresponding to a threshold value, and also indicates which pieces of measurement data are sorted, as illustrated in Fig. 10. The X-axis represents values of first-dimensional measurement data subjected to the dimensionality reduction, and the Y-axis represents values of second-dimensional measurement data subjected to the dimensionality reduction in Fig. 10. Although Fig. 10 illustrates an example of two-dimensional measurement data, the measurement data may be three-dimensionally represented.

Here, "purity" is the percentage of measurement data that is correctly labeled, and "efficiency" is the percentage of correct measurement data that is included in the labeled measurement data.

Black stars, x, black squares, black triangles, and black circles indicate the measurement data subjected to the dimensionality reduction, and portions surrounded by solid lines of squares indicate regions to which labels are assigned in Fig. 10. It is assumed that a piece of measurement data with a black star is correct in a label 101, a piece of measurement data with a black square is correct in a label 102, a piece of measurement data with a black triangle is correct in a label 103, and a piece of measurement data with a black circle is correct in a label 104.

For example, in a case of the threshold value being 0 % (the left diagram in Fig. 10), when sorting is performed in the range of the label 101, the purity and efficiency are 100 % and 100 %, respectively, when sorting is performed in the range of the label 102, the purity and efficiency are 70 % and 70 %, respectively, when sorting is performed in the range of the label 103, the purity and efficiency are 80 % and 100 %, respectively, and when sorting is performed in the range of the label 104, the purity and efficiency are 100 % and 70 %, respectively.

In a case of the threshold value being 70 % (the middle diagram in Fig. 10), when sorting is performed in the range of the label 101, the purity and efficiency are 100 % and 100 %, respectively, when sorting is performed in the range of the label 102, the purity and efficiency are 75 % and 60 %, respectively, when sorting is performed in the range of the label 103, the purity and efficiency are 88.9 % and 100 %, respectively, and when sorting is performed in the range of the label 104, the purity and efficiency are 100 % and 60 %, respectively.

In a case of the threshold value being 90 % (the right diagram in Fig. 10), when sorting is performed in the range of the label 101, the purity and efficiency are 98 % and 84 %, respectively, when sorting is performed in the range of the label 102, the purity and efficiency are 85.7 % and 60 %, respectively, when sorting is performed in the range of the label 103, the purity and efficiency are 100 % and 87.5 %, respectively, and when sorting is performed in the range of the label 104, the purity and efficiency are 100 % and 60 %, respectively.

Displaying the screen as illustrated in Fig. 10 allows the user to set the threshold value while checking a quantitative change in purity and efficiency according to the threshold value and a qualitative change in plots of measurement data that are determined to be sorted.

Fig. 11 is a diagram illustrating classes and confidence levels of measurement data subjected to dimensionality reduction according to the first embodiment.

For example, a user clicks a piece of measurement data, or a gate or the like selects a plurality of events in Fig. 11. When only one piece of measurement data is selected, the confidence levels of respective classes of the selected one piece of measurement data are displayed. The user can check the confidence levels of respective classes of the selected piece of measurement data.

When a plurality of pieces of measurement data are selected, the confidence levels of respective classes using the mean, median value, or the like of the selected plurality of pieces of measurement data are displayed. The user can check the confidence levels of the respective classes of the selected plurality of pieces of measurement data.

A table 105 indicating the respective classes and confidence levels of the selected plurality of pieces of measurement data is illustrated on the left side of Fig. 11. A table 106 indicating the respective classes and confidence levels of selected one piece of measurement data is illustrated on the right side of Fig. 11.

### 1.3. Setting of Threshold Value

### 1.3.1. Threshold Value Setting Method 1

A threshold value determined in advance may be set for each mode in threshold value setting (a threshold value setting method 1). For example, the threshold values are set as follows: Purity mode = 95 %, Normal mode = 75 %, Yield mode = 0 %, and the like. A user selects a mode, and then, the threshold value is set in response to the selection of the user in the method 1.

Fig. 12 is a diagram illustrating a screen representing relations between the modes and the purities and efficiencies according to the first embodiment. Fig. 12 illustrates the purities and efficiencies in the Yield mode, the Normal mode, and the Purity mode, and also illustrates which pieces of measurement data are sorted. The user may determine which mode to select while referring to the screen illustrated in Fig. 12.

Such a method of setting a threshold value provides an algorithm in which a mode is selected and a threshold value is set according to the selected mode. Thus, a user who has difficulty in setting a threshold value can easily set the threshold value.

### 1.3.2. Threshold Value Setting Method 2

A user may input a numerical value of a freely selected threshold value on a graphical user interface (GUI) in threshold value setting (a threshold value setting method 2). The threshold value may be input by directly inputting a numerical value, by using a slide bar, or the like.

### 1.3.3. Threshold Value Setting Method 3

The threshold value is determined in advance for each mode based on the past data in the threshold setting method 1. An appropriate threshold value is automatically calculated for each mode for individual measurement data in a threshold value setting method 3.

Fig. 13 is a diagram for describing a case where a threshold value is set for individual measurement data according to the first embodiment. The thick line indicates the purity of measurement data for validation, the thick dashed line indicates the three-point moving average line of the purities of the measurement data for validation, the thin line indicates the efficiency of the measurement data for validation, and the thin dashed line indicates the three-point moving average line of the efficiencies of the measurement data for validation in Fig. 13.

Focusing on the purities in Fig. 13, the Normal mode may be set at the confidence level at which the slope becomes gentle, and the threshold value may be set to 62 to 63 %. In addition, the Purity mode may be set at the purity at which the slope becomes steep again from the gentle slope, and the threshold value may be set to 87 to 88 %. The determination of whether the slope is gentle or steep may be made, for example, by determining that the slope is gentle when differences in slope between a certain section of the threshold value for confidence level and the sections of the threshold value before and after the certain section are equal to or less than a predetermined difference, and determining that the slope is steep when the differences in slope between the certain section of the threshold value and the sections of the threshold value before and after the certain section are equal to or more than the predetermined difference. Note that the Purity mode may be set at a point where the slope becomes gentle again around 99 % of the threshold value for the confidence level. That is, the threshold value can be set at a point having some feature with respect to the slope of the purity or the like.

Note that the mode and the threshold value may be set based on, instead of the "purity", the slope of the efficiency, the slope of combination of the purity and the efficiency, the slope of the moving average line of the purity, the slope of the moving average line of the efficiency, or the like. In addition, the threshold value may be calculated by a method that does not use the slope.

A receiver operating characteristic (ROC) curve may be used as the method of automatically determining the threshold value. Fig. 14 is a diagram for describing a case where the threshold value is set using an ROC curve of measurement data for validation according to the first embodiment.

A true positive rate (TPR) refers to a rate of the number of actually positive cases that can be correctly determined to be positive, with respect to the number of all positive cases in Fig. 14. A false positive rate (FPR) refers to a rate of actually negative cases that are incorrectly determined to be positive, with respect to the number of all negative cases.

The threshold value at which the purity and the efficiency are balanced is a threshold value positioned closest to the upper left (0, 1) when an ROC curve is drawn, and thus, this value may be adopted as the threshold value.

In order to calculate the threshold value closest to (0, 1), searching may be performed using a Euclidean distance or the like, or the threshold value may be obtained by another method.

1.4. Visualization Using Similarities or Confidence Levels

The dimensionality reduction reduces multi-dimensional information into low-dimensional information, and thus, it is impossible to completely express a relation in a multi-dimensional space by using a low-dimensional space.

This may cause a case in which even similar types of cells such as CD4 + T cells and CD8 + T cells are distributed at distant positions. This deteriorates the efficiency of analysis of such similar cell tumors.

A cell group is selected by gating or the like in the dimensionality reduction, the similarity or confidence level between the selected cell group and a cell to be measured is calculated using each piece of measurement data, and the cell is displayed in a color corresponding to the calculated similarity or confidence level, in the analysis method of the present disclosure.

The measurement data may be visualized by changing shades of pieces of the measurement data, or may be visualized by changing colors of the pieces of the measurement data based on the similarities as an example of a visualization method.

A similarity may be obtained by distance-based calculation such as a Euclidean distance, a Manhattan distance, or a Chebyshev distance, similarity-based calculation such as a cosine similarity, a Jaccard coefficient, or a Dice coefficient, or other calculations.

This visualization may be performed for the purpose of analysis, or may be performed on the measurement data after sorting.

Fig. 15 is a diagram illustrating a display example of measurement data subjected to the dimensionality reduction according to the first embodiment. The pieces of measurement data subjected to the dimensionality reduction are represented according to the similarities to measurement data 111 of the selected cell group in Fig. 15. The pieces of measurement data are represented in a darker color as the similarities to the measurement data 111 of the selected cell group are higher in Fig. 15.

Additionally, visualization using the similarities or the confidence levels may be performed not only on the plots subjected to the dimensionality reduction but also on data before fluorescence compensation as illustrated in Fig. 16 and data after fluorescence compensation as illustrated in Fig. 17.

Fig. 16 is a diagram illustrating a display example in which pieces of measurement data of cells to be measured before fluorescence compensation are displayed in different colors corresponding to the similarities according to the first embodiment. The pieces of measurement data are displayed in different colors according to the similarities to the measurement data 111 of the selected cell group, as illustrated in Fig. 16.

When the piece of measurement data of the cell to be measured before the fluorescence compensation is displayed, a value corresponding to a ch of each light receiving system may be displayed for each ch. Alternatively, the horizontal axis may represent the fluorescence intensity of each fluorescent dye, and the vertical axis may represent the value corresponding to the ch of each light receiving system. Fig. 17 is a diagram illustrating a display example in which pieces of measurement data of cells to be measured after the fluorescence compensation are displayed in different colors according to the similarities according to the first embodiment. Here, the X-axis and the Y-axis in Fig. 17 individually represent the fluorescence intensity after the fluorescence compensation of each fluorescent dye (Color) included in the measurement data.

### 1.5. Functional Block Diagram of Information Processing Device 300

Fig. 18 is a functional block diagram of an information processing device 300 according to the first embodiment, which performs sorting of measurement data in deep learning.

A measurement device 311 is connected to the information processing device 300 as illustrated in Fig. 18. The measurement device 311 measures a sample (for example, cells or the like), adds necessary data (for example, a color of fluorescence of a cell, an intensity of the fluorescence, or the like) to the measured measurement data, and outputs the measurement data added with the necessary data to the information processing device 300. At least an event (for example, the cell 1) of the measurement data is measured in the measurement.

The information processing device 300 includes an acquisition unit 312, a preprocessing unit 313, a dimensionality reduction unit 314, a gate unit 315, a division unit 316, a training unit 317, an estimation unit 318, a threshold value setting unit 319, a display unit 320, and a sorting unit 321.

The acquisition unit 312 acquires a plurality of pieces of measurement data from the measurement device 311 outside the information processing device 300. The preprocessing unit 313 performs down-sampling, narrowing down of a target population, and the like on the pieces of measurement data measured by the acquisition unit 312.

The dimensionality reduction unit 314 performs the dimensionality reduction of the pieces of measurement data on which the preprocessing has been performed by the preprocessing unit 313. The "dimensionality reduction" means that, in pieces of multi-dimensional data, a feature common to the pieces of data is found and the pieces of data are expressed in a low dimension with a relation of data distribution in a multi-dimensional space maintained as much as possible.

The dimensionality reduction unit 314 determines a sorting target range after the dimensionality reduction of the pieces of measurement data. The measurement data subjected to the dimensionality reduction by the dimensionality reduction unit 314 includes measurement data for validation and measurement data for training.

Raw values before fluorescence compensation such as a spectrum may be used, or data after fluorescence compensation may be used as explanatory variables of the measurement data. In addition, when the fluorescence compensation is performed, an inverse matrix is calculated, and at this time, the solution may be obtained by using the Gauss-Jordan method. Further, an algorithm such as normalization may be used as preprocessing of clustering for the purpose of suppressing a batch effect.

The gate unit 315 gates the measurement data (including the measurement data for validation and the measurement data for training) subjected to the dimensionality reduction by the dimensionality reduction unit 314. Further, the gate unit 315 adds a label to the measurement data for training of the measurement data subjected to the dimensionality reduction by the dimensionality reduction unit 314. The division unit 316 divides a plurality of pieces of measurement data subjected to the dimensionality reduction and gated by the gate unit 315 into a plurality of pieces of measurement data for training and a plurality of pieces of measurement data for validation.

The training unit 317 performs machine learning using the measurement data for training (the measurement data before the fluorescence compensation or the measurement data after the fluorescence compensation) divided by the division unit 316 and the label added to the measurement data for training by the gate unit 315 to build a learning model. The learning model estimates measurement data for determining whether the biologically derived particles are a sorting target and estimates confidence levels.

The estimation unit 318 inputs at least one or some of the plurality of pieces of measurement data (measurement data for validation) to the learning model created by the training unit 317, and infers whether to sort the input pieces of measurement data.

The estimation unit 318 perform estimation of the plurality of pieces of measurement data for validation by using ground truth and confidence levels of the estimation, for the plurality of pieces of measurement data for validation, among the plurality of pieces of measurement data acquired by the acquisition unit 312. Specifically, the estimation unit 318 estimates the plurality of pieces of measurement data for validation and estimates confidence levels by using the learning model generated by the training unit 317.

The estimation unit 318 includes a confidence level calculation unit that calculates the confidence levels of estimation results based on a plurality of pieces of measurement data used for inference by the estimation unit 318 and information obtained by data compression processing.

The threshold value setting unit 319 sets a threshold value for sorting the plurality of pieces of measurement data acquired by the acquisition unit 312, for the pieces of measurement data corresponding to the confidence levels estimated by the estimation unit 318.

The display unit 320 displays, on a screen, pieces of measurement data for validation, a threshold value, classification (classes), a mode, purities and efficiencies of the pieces of measurement data for validation, and the like. The display unit 320 can display a result of estimation by the estimation unit 318.

The sorting unit 321 sorts pieces of measurement data to be sorted among the plurality of pieces of measurement data acquired by the acquisition unit 312 based on the threshold value set by the threshold value setting unit 319. Specifically, the sorting unit 321 classifies, into classes, the remaining pieces of measurement data other than the pieces of measurement data for which the estimation is performed and the confidence levels are estimated by the estimation unit 318 and the pieces of measurement data for validation, and sorts the classified pieces of measurement data included into the classes by using the set threshold value.

The remaining pieces of measurement data are pieces of measurement data for measurement of a sample other than the sample of the pieces of measurement data for training and the sample of the pieces of measurement data for validation. The sample of the pieces of measurement data for measurement is caused to flow into the measurement device 311 after an instruction is given from the information processing device 300 to the measurement device 311. Then, the measurement device 311 sorts the sample that has been caused to flow, and outputs the measurement data of the sorted sample to the acquisition unit 312 of the information processing device 300. The instruction from the information processing device 300 to the measurement device 311 is performed, for example, after the threshold value setting unit 319 sets the threshold value.

### 1.6. Description of Operation

Fig. 19 is a flowchart for describing sorting of measurement data in deep learning of the information processing device 300 according to the first embodiment.

First, one or some of a plurality of samples are caused to flow into the measurement device 311, and the one or some of the plurality of samples are measured (step S1). Next, preprocessing such as down-sampling of the measured one or some of the plurality of samples and narrowing down of a target population is performed (step S2).

Next, the one or some of the plurality of pieces of measurement data on which the preprocessing has been performed are subjected to dimensionality reduction (step S3), and the one or some of the plurality of pieces of measurement data on which the dimensionality reduction has been performed are gated (step S4). Here, raw values before fluorescence compensation, such as a spectrum, may be used as data subject to dimensionality reduction and explanatory variables during learning, or data after fluorescence compensation may be used. In addition, when the fluorescence compensation is performed, an inverse matrix is calculated, and at this time, the solution may be obtained by using the Gauss-Jordan method. Further, an algorithm such as normalization may be used as the preprocessing of the dimensionality reduction for the purpose of suppressing a batch effect.

Next, the one or some of the plurality of pieces of measurement data subjected to the dimensionality reduction and gated by the gate unit 315 are divided into a plurality of pieces of measurement data for training and a plurality of pieces of measurement data for validation (step S5).

Next, training is performed using the plurality of pieces of measurement data for training that have been divided, and a learning model is generated (step S6). Then, the generated learning model is used to perform estimation of the plurality of pieces of measurement data for validation by using ground truth and then estimate the confidence levels of the estimation, for the plurality of pieces of measurement data for validation (step S7).

After that, a threshold value is set for the estimated confidence levels (step S8). The threshold value may be set by an instruction from a user or may be automatically set. Next, the user checks the values of purities and efficiencies displayed on the display unit 320, the state of the plots of the pieces of measurement data, and the like (step S9), and if the setting of the threshold value is not appropriate (NG in step S9), the processing returns to step S8, and the threshold value is set again.

On the other hand, if the setting of the threshold value is appropriate (OK in step S9), the remaining samples are caused to flow (step S10), the sorting of measurement data is performed on the remaining pieces of measurement data measured for the remaining samples (step S11), and the sorting of the pieces of measurement data to be sorted is determined by the set threshold value based on the confidence levels of the pieces of measurement data in the classes of the sorted pieces of measurement data (step S12).

### 1.7. Modifications

The case where the information processing device 300 performs sorting on the remaining pieces of measurement data has been described in the first embodiment, but it takes time to process sorting of the remaining pieces of measurement data and thus the processing may be performed by the measurement device 311.

Fig. 20 is a block diagram illustrating a configuration example of a biological particle analysis system 1 according to a modification of the first embodiment. The same reference numerals are given to the same components as those in Fig. 4 in the following description.

The biological particle analysis system 1 according to the modification is an example in which some functions of the information processing device 20 illustrated in Fig. 4 are divided and provided in the sorting device 10 connected via a network.

Specifically, the sorting device 10 includes the analysis unit 203, the reference spectrum storage unit 205, the data compression processing unit 207, and the training unit 211 in the biological particle analysis system according to the modification as illustrated in Fig. 20. The sorting device 10 acquires measurement data from the sample S and sorts particles to be sorted based on the determination of the information processing device 20. The information processing device 20 includes the acquisition unit 201, the learning model storage unit 213, and the determination unit 215.

Note that the information processing device 20 and the sorting device 10 are connected to each other in a communicable manner via a network such as a public line network such as the Internet, a telephone line network, or a satellite communication network, various local area networks (LANs) including Ethernet (registered trademark), and a wide area network (WAN).

The sorting device 10 can perform functions with a large calculation load (for example, the analysis unit 203, the data compression processing unit 207, and the training unit 211) in the biological particle analysis system according to the modification. On the other hand, since it is desired to avoid a delay due to a network or the like for rapid determination, and the calculation load is not large, the functions of the determination unit 215 and the learning model storage unit 213 may be assigned to the information processing device 20 directly connected to the sorting device 10.

Fig. 21 is a functional block diagram of an information processing system according to a modification of the first embodiment. Note that the same reference numerals are given to the same components as those in Fig. 18 in the following description. The sorting unit 321 provided in the information processing device 300 may be provided in the measurement device 311 as illustrated in Fig. 21.

Note that the preprocessing unit 313 and the threshold value setting unit 319 may be provided in the measurement device 311.

The threshold value set by the threshold value setting unit 319 and the remaining pieces of measurement data that have not been used for validation and learning by the estimation unit 318 are output from the information processing device 300 to the measurement device 311 as illustrated in Fig. 21.

The sorting unit 321 of the measurement device 311 receives the threshold value and the remaining pieces of measurement data other than the pieces of measurement data used for estimation, which have been output from the information processing device 300, and sorts the remaining pieces of measurement data by using the received threshold value.

The sorting unit (determination unit) of the measurement device 311, which is a biologically derived particle sorting device, inputs the optical information measured from the biologically derived particles subject to sorting to the learning model created by the training unit 317, infers whether the biologically derived particles subject to sorting are the sorting targets, and performs determination for sorting based on the threshold value set by the threshold value setting unit 119 when the biologically derived particles subject to sorting are inferred to be the sorting targets. The biologically derived particle sorting device sorts the sorting target particles based on the determination for sorting of the determination unit. The biologically derived particles subject to sorting are included in the sample. Next, a modification of the information processing system according to the first embodiment will be described. Fig. 22 is a functional block diagram illustrating the modification of the information processing system according to the first embodiment.

A function with a large calculation load (for example, the preprocessing unit 313, the dimensionality reduction unit 314, the gate unit 315, the division unit 316, the training unit 317, the estimation unit 318, and the threshold value setting unit 319) can be assigned to a device with a higher calculation capability (in the example of Fig. 22, the information processing server 301), as illustrated in Fig. 22, in the modification of the information processing system according to the first embodiment.

The information processing device 300 may be a cloud-based computer connected to the measurement device 311 via a network. In this case, the cloud-based computer may execute one or some functions of the dimensionality reduction unit 314, the training unit 317 for machine learning, the threshold value setting unit 319, and the like of the information processing device 300.

On the other hand, the information processing device 300 directly connected to the measurement device 311 may perform functions in order to avoid a delay due to a network or the like to perform quick determination and may perform a function whose calculation load is not so large.

The information processing system according to the modification of the first embodiment can appropriately classify pieces of measurement data, similarly to the information processing device 300 according to the first embodiment.

### 2. Second Embodiment

### 2.1. Sorting (Clustering) Based on Confidence Levels

A threshold value for clustering-based sorting is set in a second embodiment. When sorting is performed using a clustering algorithm, classification into a cluster having the relatively highest similarity among all clusters is properly performed. However, it is not clear whether the classification result is the closest in an absolute sense.

When the absolute distance from the cluster into which a piece of measurement data is classified is long, the cluster into which the piece of measurement data is classified may be regarded as a non-sorting target for a user who prioritizes purity. A threshold value is provided such that the piece of measurement data is sorted only when the distance is shorter than a certain distance in the second embodiment.

### 2.2. Threshold Value for Clustering-Based Sorting

Fig. 23 is a diagram for describing a concept of a threshold value of clustering-based sorting according to the second embodiment.

The parameter on the horizontal axis indicates, for example, the types of fluorescently dyed antibodies, antigen markers, and CD classifications, and the vertical axis indicates the fluorescence intensity of events (for example, cells) in Fig. 23. The solid line indicates representative values of clusters, and the dashed line indicates target events (measurement values of the remaining pieces of measurement data).

For example, when a threshold value of 50 % is set for the representative value of the cluster corresponding to the leftmost parameter as illustrated in Fig. 23, a range of 25 % to 75 % of the representative value of the cluster is set as a range of the threshold value as illustrated in Fig. 24. Fig. 24 is a diagram for describing a concept of the range when the threshold value in the clustering-based sorting according to the second embodiment is set to 50 %. Then, when the measurement value (fluorescence intensity) of the parameter of the leftmost target event illustrated in Fig. 23 falls within the range of 25 % to 75 % of the representative value of the cluster, the measurement value is determined to be sorted. The measurement value of the parameter of the leftmost event does not fall within the range of the threshold value, and thus is not a sorting target in the case of Fig. 23.

For example, when a threshold value of 50 % is set for the representative value of the cluster corresponding to the second parameter from the leftmost side, a range of 25 % to 75 % of the representative value of the cluster is set as the range of the threshold value as illustrated in Fig. 24. In addition, when the measurement value of the parameter of the second target event from the leftmost side falls within the range of 25 % to 75 % of the representative value of the cluster, the measurement value is determined to be sorted. The second measurement value from the leftmost side does not fall within the range of the threshold value, and thus is not a sorting target in the case of Fig. 23.

For example, when a threshold value of 50 % is set for the representative value of the cluster corresponding to the third parameter from the leftmost side, a range of 25 % to 75 % of the representative value of the cluster is set as the range of the threshold value as illustrated in Fig. 24. Then, when the third measurement value from the leftmost side falls within the range of 25 % to 75 % of the representative value of the cluster, the measurement value is determined to be sorted. The third measurement value from the leftmost side falls within the range of the threshold value, and thus is determined to be sorted in the case of Fig. 24.

The threshold value of the clustering-based sorting may be determined as follows in the second embodiment.

### 2.2.1. Case of Determination Using Threshold Value for Each Parameter

- A threshold value of an absolute value is input, and if all parameters are within the range of the representative value of the cluster ± the threshold value, the measurement value is sorted.
- A threshold value of a rate is input, and if all parameters are within the range of the representative value of the cluster ± the representative value × the threshold value, the measurement value is sorted.
- In each cluster, if all the parameters are within the threshold value input by the user by using a frequency distribution or the like for each parameter, sorting is performed.

### 2.2.2. Case of Determination Using Threshold Value by Averaging of All Parameters

- A threshold value of an absolute value is input, and if the mean (|measurement value - representative value|) is within the threshold value, sorting is performed.
- A threshold value of a rate is input, and if the mean (|measurement value - representative value|) falls within the average of the representative values × the threshold value, sorting is performed.

Here, the "mean" means an average. When the random forest is adopted as an algorithm, the number of trees or the rate of the number of trees may be set as the threshold value in performing majority vote of decision trees. The threshold value may be automatically determined based on the measurement data or may be determined by the user.

The threshold value may be determined using not only the average value but also a median value of a plurality of pieces of measurement data included in a cluster. In addition, the determination of the threshold value may use a representative value determined by the training unit 317.

### 2.3. Functional Block Diagram of Information Processing Device 400

Fig. 25 is a functional block diagram for clustering-based sorting of an information processing device 400 according to the second embodiment.

A measurement device 411 is connected to the information processing device 400 as illustrated in Fig. 25. The measurement device 411 measures a sample (for example, cells or the like), adds necessary data (for example, a color of fluorescence of the cell, an intensity of the fluorescence, or the like) to the measured measurement data, and outputs the measurement data added with the necessary data to the information processing device 400. At least an event (for example, the cell 1) of the measurement data is measured in the measurement.

The information processing device 400 includes an acquisition unit 412, a preprocessing unit 413, a class formation and clustering unit 414, a cluster selection unit 415, a display unit 416, a threshold value setting unit 417, and a sorting unit 418.

The acquisition unit 412 acquires a plurality of pieces of measurement data from the measurement device 411 outside the information processing device 400. The preprocessing unit 413 performs down-sampling, narrowing down of a target population, and the like on the measurement data measured by the acquisition unit 412.

The class formation and clustering unit 414 classifies the plurality of pieces of measurement data acquired by the acquisition unit 412 into classes. The class formation and clustering unit 414 classifies the plurality of pieces of measurement data acquired by the acquisition unit 412 into clusters.

The cluster selection unit 415 selects a cluster to be sorted from the classes classified by the class formation and clustering unit 414. The display unit 416 displays a screen of efficiencies or the like of the classified pieces of measurement data (for example, the pieces of measurement data, classes, threshold values, modes, purities, efficiencies, classified pieces of measurement data, and clusters of the classified pieces of measurement data). The threshold value setting unit 417 sets a threshold value for a representative value of the cluster, which is the average of a plurality of pieces of measurement data included in the cluster selected by the cluster selection unit 415.

The median value of the plurality of pieces of measurement data included in the cluster may be used as the threshold value. In addition, the determination of the threshold value may use a representative value determined by the training unit 317.

The sorting unit 418 sorts pieces of measurement data to be sorted among the pieces of measurement data included in the cluster classified by the class formation and clustering unit 414 based on the threshold value set by the threshold value setting unit 417.

Specifically, when all the measurement values of the plurality of pieces of measurement data included in the cluster classified by the class formation and clustering unit 414 fall within a range of the representative value ± the threshold value, the sorting unit 418 sorts sampling data included in the cluster classified by the class formation and clustering unit 414 as a sorting target.

When all the measurement values of the plurality of pieces of measurement data included in the cluster classified by the class formation and clustering unit 414 fall within the representative value ± the representative value × the threshold value, the sorting unit 418 may sort the sampling data included in the cluster classified by the clustering unit as the sorting target.

### 2.4. FlowSOM Circuit

Fig. 26 is a block diagram illustrating a first example of a FlowSOM circuit according to the second embodiment. The FlowSOM is a known clustering algorithm. Event data a (with d dimensions) and data b of a node (cluster) 1 containing representative values with d dimensions are input to a subtraction unit 551, and a difference (a - b) is calculated as illustrated in Fig. 26.

A squaring unit 552 calculates the square (a - b)² of the difference (a - b) calculated by the subtraction unit 551, and the calculated result is output to a summing unit 553. The summing unit 553 calculates the sum Σ(a - b)² of the square (a - b)² of the difference (a - b) calculated by the squaring unit 552, and the calculated result is output to a comparison unit 554.

The comparison unit 554 compares the minimum distance currently held in a minimum-distance holding unit 555 and the sum Σ(a - b)² output from the summing unit 553, and a smaller distance is held in the minimum-distance holding unit 555 as the minimum distance.

Specifically, the comparison unit 554 replaces the minimum distance with the sum Σ(a - b)² of the event data a and the data b, which have a close Euclidean distance, to be held in the minimum-distance holding unit 555. That is, the comparison unit 554 performs comparison to search for a node having the smallest error. This classifies the data into the node (cluster) with the minimum distance held in the minimum-distance holding unit 555.

The pieces of data b of the node 1, the node 2, ..., and the node N are sequentially input to the subtraction unit 551 in series, but the pieces of data b of the node 1, the node 2, ..., and the node N may be processed in parallel.

Fig. 27 is a diagram illustrating a second example of the FlowSOM circuit according to the second embodiment. As illustrated in Fig. 27, 100 pieces of data corresponding to a node 1 to a node 100 are input with the number of parallel operations being 10.

Specifically, pieces of data b, each of which contains d-dimensional representative values, of the node 1, the node 2, the node 3, ..., and the node 10 are input in parallel to a subtraction unit 551_1 to a subtraction unit 551_10, respectively. The event data a (with d dimensions) is also input to the subtraction unit 551_1 to subtraction unit 551_10.

The pieces of data b of the node 1, the node 11, the node 21, ..., and the node 91 are sequentially input. The pieces of data b of the node 2, the node 12, the node 22, ..., and the node 92 are sequentially input, the pieces of data b of the node 3, the node 13, the node 23, ..., and the node 93 are sequentially input, and the pieces of data b of the node 10, the node 20, the node 30, ..., and the node 100 are sequentially input.

The event data a (with d dimensions) and the pieces of data b of the nodes (clusters) 1, 2, ..., and N, each of which has the d-dimensional representative values, are input to the respective subtraction unit 551_1 to subtraction unit 551_10, and the difference (a - b) is calculated.

A squaring unit 552_1 to a squaring unit 552_10 calculate the square (a - b)² of the difference (a - b) calculated by the subtraction unit 551_1 to the subtraction unit 551_10, respectively, and output the calculation results to a summing unit 553_1 to a summing unit 553_10, respectively. The summing unit 553_1 to the summing unit 553_10 calculate the sum Σ(a - b)² of the square (a - b)² of the difference (a - b) calculated by the squaring unit 552_1 to the squaring unit 552_10, respectively, and output the calculation results to a comparison unit 554_1 to a comparison unit 554_10, respectively.

The comparison unit 554_1 to the comparison unit 554_10 compare the minimum distances currently held in a minimum-distance holding unit 555_1 to a minimum-distance holding unit 555_10 with the sums Σ(a - b)² output from the summing unit 553_1 to the summing unit 553_10, respectively, and store a smaller distances as the minimum distances in the minimum-distance holding unit 555_1 to the minimum-distance holding unit 555_10, respectively.

A node (cluster) having the shortest distance among the node 1, the node 11, the node 21, ..., and the node 91, a node (cluster) having the shortest distance among the node 2, the node 12, the node 22, ..., and the node 92, ..., and a node (cluster) having the shortest distance among the node 10, the node 20, the node 30, ..., and the node 100 are classified in the minimum-distance holding unit 555_1 to the minimum-distance holding unit 555_10, respectively.

The comparison unit 556 compares the minimum distances held in the minimum-distance holding unit 555_1 to the minimum-distance holding unit 555_10, and holds the smaller distance as the minimum distance in a minimum-distance holding unit 257. As a result, the node (cluster) having the minimum distance among the node 1 to the node 100 is separately held in the minimum-distance holding unit 257.

Note that the number of nodes is 100 and the number of parallel operations is 10 in Fig. 27, but the numbers may be freely selected according to circuit resources. Although Fig. 27 illustrates the configuration including only one comparison unit 556, but a plurality of comparison units 556, instead of only one comparison unit 556, are used to perform processing in parallel.

Fig. 28 is a diagram illustrating a third example of the FlowSOM circuit according to the second embodiment. A symbol of ◇ indicates a metacluster, and a symbol of □ indicates a node associated with a metacluster for which the minimum value is selected in Fig. 28.

The number of metaclusters is 8, and the number of nodes associated with the metacluster for which the minimum value is selected is 10 in Fig. 28, but the number of metaclusters and the number of nodes are not limited thereto. Although Fig. 28 illustrates a case where the node 1 to the node 10 associated with the metacluster are calculated in series, the calculation may be performed in parallel.

A metacluster having the minimum distance among the metaclusters 1 to 8 is found by processing of a subtraction unit 571 to a minimum-distance holding unit 575 in the third example of the FlowSOM circuit illustrated in Fig. 28. Thereafter, a node having the final distance is selected from among the 10 nodes associated with the metacluster having the minimum distance.

The event data a (with d dimensions) and the piece of data b of the node (cluster) that is associated with the selected metacluster having the smallest error and that includes the d-dimensional representative values are input to the subtraction unit 571, and the difference (a - b) is calculated in Fig. 28.

The squaring unit 572 calculates the square (a - b)² of the difference (a - b) calculated by the subtraction unit 571, and the calculated result is output to the summing unit 573. The summing unit 573 calculates the sum Σ(a - b)² of the square (a - b)² of the difference (a - b) calculated by the squaring unit 572, and the calculated result is output to the comparison unit 574.

The comparison unit 574 compares the minimum distance currently held in the minimum-distance holding unit 555 and the sum Σ(a - b)² output from the summing unit 573, and a smaller distance is held in the minimum-distance holding unit 575 as the minimum distance.

Specifically, the comparison unit 574 replaces the minimum distance with the sum Σ(a - b)² of the event data a and the data b, which have a close Euclidean distance, held in the minimum-distance holding unit 575. That is, the comparison unit 574 performs comparison to search for a node having the smallest error. Thus, the node (cluster) of the minimum distance held in the minimum-distance holding unit 575 is selected.

The pieces of data b of the node 1, the node 2, ..., and the node 10 associated with the metacluster having the error of the minimum distance are sequentially input to the subtraction unit 571 in series, but the pieces of data b of the node 1, the node 2, ..., and the node 10 may be processed in parallel.

### 2.5. Description of Operation

Fig. 29 is a flowchart for describing clustering-based sorting in the information processing device 400 according to the second embodiment.

First, one or some of a plurality of samples are caused to flow through the measurement device 411, and the one or some of the plurality of samples are measured (step S21). Next, preprocessing such as down-sampling of the measurement data of the measured one or some samples of the plurality of samples and narrowing down of a target population is performed (step S22).

Then, class formation is performed to classify the preprocessed one or some pieces of the plurality of pieces of measurement data into classes (step S23). A cluster to be sorted is selected from the clusters subjected to the class formation (step S24).

Next, a threshold value is set for a representative value that is an average of a plurality of pieces of measurement data included in the selected cluster (step S25). Note that the threshold value may be a threshold value for a median value of a plurality of pieces of measurement data included in the selected cluster. Next, a user checks the value of an efficiency displayed on the display unit 416 (step S26), and if the efficiency is not 100 % (NOT OK in step S26), the processing returns to step S25, and the threshold value is set again. Note that the value of the efficiency may be a freely selected value determined by the user, instead of 100 %.

On the other hand, if the efficiency is 100 % (OK in step S26), the remaining samples are caused to flow (step S27) and clustering is performed on the remaining pieces of measurement data (step S28). Next, pieces of measurement data to be sorted among the remaining pieces of measurement data included in the cluster classified based on the set threshold value are classified using the set threshold value (step S29).

Here, raw values before fluorescence compensation such as a spectrum may be used, or data after fluorescence compensation may be used as explanatory variables of the clustering target data. In addition, when the fluorescence compensation is performed, an inverse matrix is calculated, and at this time, the solution may be obtained by using the Gauss-Jordan method. Further, an algorithm such as normalization may be used as preprocessing of clustering for the purpose of suppressing a batch effect.

### 2.6. Modifications

The case where the information processing device 400 classifies the remaining pieces of measurement data has been described in the second embodiment, but it takes time to process the classification of the remaining pieces of measurement data and thus the processing may be performed by the measurement device 411.

Fig. 30 is a functional block diagram of an information processing system according to a modification of the second embodiment. Note that the same reference numerals are given to the same components as those in Fig. 25 in the following description. The sorting unit 418 provided in the information processing device 400 may be provided in the measurement device 411 as illustrated in Fig. 30.

The threshold value set by the threshold value setting unit 417 and the cluster subjected to clustering by the class formation and clustering unit 414 are output from the information processing device 400 to the measurement device 411 as illustrated in Fig. 30.

The sorting unit 418 of the measurement device 411 receives the threshold value and the cluster subjected to clustering output from the information processing device 400, and sorts the pieces of measurement data included in the cluster by using the received threshold value.

The information processing system according to the modification of the second embodiment enables appropriate classification of the measurement data, similarly to the information processing device 400 according to the second embodiment.

### 2.7. Flowchart for FlowSOM-Based Sorting

Next, an operation of the first example of the FlowSOM circuit illustrated in Fig. 26 will be described. Fig. 31 is a flowchart for describing the operation of the first example of the FlowSOM circuit according to the second embodiment.

As illustrated in Fig. 31, i = 0 is set (step S31), and it is determined whether i < d (d: the number of dimensions) is satisfied (step S32). When i < d is satisfied (Yes in step S32) in step S32, a difference value between an i-dimensional value of the representative vector of each node and an i-dimensional value of an event to be sorted is calculated (step S33).

Next, the difference value, which has been calculated in step S33, between the i-dimensional value of the representative vector of each node and the i-dimensional value of the event to be sorted is squared (step S34), and the squared difference value is integrated (step S35). Next, i = i + 1 is set (step S36), and the processing returns to step S32.

When i < d is not satisfied (No in step S32) in step S32, a node having the smallest integrated value of squared difference values is calculated (step S37), and the processing is terminated. Thus, the node (cluster) having an error with the minimum distance is selected.

Next, an operation of the third example of the FlowSOM circuit illustrated in Fig. 28 will be described. Fig. 32 is a flowchart for describing the operation of the third example of the FlowSOM circuit according to the second embodiment.

As illustrated in Fig. 32, i = 0 is set (step S41), and it is determined whether i < d (d: the number of dimensions) is satisfied (step S42). When i < d is satisfied (Yes in step S42) in step S42, a difference value between an i-dimensional value of the representative vector of each metacluster and an i-dimensional value of an event to be sorted is calculated (step S43).

Next, the difference value, which has been calculated in step S43, between the i-dimensional value of the representative vector of each metacluster and the i-dimensional value of the event to be sorted is squared (step S44), and the squared difference value is integrated (step S45). Next, i = i + 1 is set (step S46), and the processing returns to step S42.

When i < d is not satisfied (No in step S42) in step S42, a metacluster having the smallest squared difference value is calculated (step S47), and j = 0 is set (step S48).

Next, it is determined whether j < d (d: the number of dimensions) is satisfied (step S49). When j < d is satisfied (Yes in step S49) in step S49, a difference value between a j-dimensional value of the representative vector of each node belonging to the metacluster having the smallest squared difference value and a j-dimensional value of the event to be sorted is calculated (step S50).

Next, the difference value between the j-dimensional value of the representative vector of each node belonging to the metacluster calculated in step S50 and the j-dimensional value of the event to be sorted is squared (step S51), and the squared difference value is integrated (step S52). Next, j = j + 1 is set (step S53), and the processing returns to step S49.

When j < d is not satisfied (No in step S49) in step S49, a node having the smallest integrated value of squared differences is calculated (step S54), and the processing is terminated. Thus, the node (cluster) having an error with the minimum distance is selected.

A metacluster having the shortest Euclidean distance is firstly selected, and then the distance to each node belonging to the metacluster is calculated in the third example, and thus reduction of calculation resources and speed-up of processing can be expected.

### 3. Third Embodiment

### 3.1. Sorting Based on Confidence Levels

The description has been given from the viewpoint of a general flow cytometer (FCM) mainly using fluorescence intensity without using an image in the second embodiment. A case where sorting based on confidence levels is adopted to an imaging flow cytometer (IFCM) will be described in a third embodiment.

Fluorescence intensity can be measured as in the normal FCM, and images of individual cells can be captured in the IFCM. A population to be sorted (objective variable) is specified by dimensionality reduction, clustering, or the like with fluorescence intensity or an image used as an input, and then learning is performed using the fluorescence intensity or the image as an explanatory variable in the third embodiment. Then, an appropriate threshold value is set and sorting is performed.

Here, the fluorescence intensity may be either data before or data after fluorescence compensation, and the image may be either image data as it is or image data on which preprocessing such as convolution is performed. Further, the method described in "1.3. Setting of Threshold Value" may be adopted for setting the threshold value.

### 3.2. Functional Block Diagram of Information Processing Device 600

Fig. 33 is a functional block diagram for IFCM-based sorting of an information processing device 600 according to the third embodiment.

A measurement device 611 is connected to the information processing device 600 as illustrated in Fig. 33. The measurement device 311 measures a sample, adds necessary data to the measured measurement data, and outputs the measurement data added with the necessary data to the information processing device 600. At least an event (for example, the cell 1) of the measurement data is measured in the measurement.

The information processing device 600 includes an acquisition unit 612, a preprocessing unit 613, a determination unit 614, a dimensionality reduction/clustering unit 615, a population specification unit 616, a division unit 617, a training unit 618, an estimation unit 619, a display unit 620, a threshold value setting unit 621, and a sorting unit 622.

The acquisition unit 612 acquires a plurality of pieces of measurement data from the measurement device 611 outside the information processing device 600. The preprocessing unit 613 performs down-sampling, narrowing down of a target population, and the like on the measurement data measured by the acquisition unit 612.

The determination unit 614 determines which one of fluorescence data or image data included in measurement data is input among the plurality of pieces of measurement data acquired by the acquisition unit 612. The dimensionality reduction/clustering unit 615 performs dimensionality reduction on the fluorescence data or the image data determined by the determination unit or classifies the fluorescence data or the image data into clusters.

The population specification unit 616 specifies a population to be sorted from the classified fluorescence data or image data subjected to dimensionality reduction by the dimensionality reduction/clustering unit 615, or from the cluster into which the data has been classified. The division unit 617 divides the fluorescence data or image data specified by the population specification unit 616 into fluorescence data or image data for training and fluorescence data or image data for validation.

The training unit 618 performs training by using a plurality of pieces of measurement data for training divided by the division unit 617, and generates a learning model. The estimation unit 619 performs estimation on a plurality of pieces of measurement data for validation among the pieces of measurement data included in the population specified by the population specification unit 616 and estimates confidence levels of the estimation of the plurality of pieces of measurement data for validation. Specifically, the estimation unit 619 estimates the confidence levels of the fluorescence data or the image data for validation by the learning model generated by the training unit 618.

The display unit 620 displays, on a screen, the measurement data for validation, a threshold value, classification (classes), the threshold value, a mode, and the like as necessary in addition to purities and efficiencies of the measurement data for validation.

The threshold value setting unit 621 sets a threshold value for classifying the plurality of pieces of measurement data acquired by the acquisition unit 612, for the confidence levels estimated by the estimation unit 619. The sorting unit 622 sorts the fluorescence data or image data classified and subjected to the dimensionality reduction by the dimensionality reduction/clustering unit 615, or the pieces of measurement data included in the classified cluster as the measurement data to be sorted based on the threshold value set by the threshold value setting unit 621.

The sorting unit 622 sorts, as a sorting target, the remaining fluorescence data or image data other than the fluorescence data or image data for validation and the fluorescence data or image data for training among the plurality of pieces of measurement data acquired by the acquisition unit 612.

Specifically, when all the measurement values of the plurality of pieces of measurement data included in the classified cluster fall within a range of the representative value ± the threshold value, the sorting unit 622 sorts the sampling data included in the classified cluster as the sorting target.

When all the measurement values of the plurality of pieces of measurement data included in the classified cluster fall within a range of the representative value ± the representative value × the threshold value, the sorting unit 622 may sort the sampling data included in the cluster classified by the clustering unit as a sorting target.

### 3.3. Description of Operation

Fig. 34 is a flowchart for describing IFCM-based sorting in the information processing device 600 according to the third embodiment.

First, some of the samples are caused to flow into the measurement device 611, and the samples that are some of the samples described above and include a plurality of samples are measured (step S131). Next, preprocessing such as down-sampling of the pieces of measurement data of the measured some of the samples of the plurality of samples and narrowing down of a target population is performed (step S132).

Next, it is determined which of the fluorescence or image of some of the plurality of pieces of measurement data on which the preprocessing has been performed is to be input (step S133). Then, dimensionality reduction and clustering are performed on the fluorescence or the image determined in step S33 (step S134). Next, a population to be sorted is specified from the cluster on which clustering has been performed in step S34 (step S135). Here, the "population" is an island obtained by dimensionally reducing the fluorescence or image, and the dimensionally reduced fluorescence or image forming the island is gated.

Here, as input data to dimensionality reduction and clustering processing and explanatory variables at the time of training, raw values before fluorescence compensation, such as a spectrum, may be used, or data after fluorescence compensation may be used. When an image is used, raw data may be used, or the image after preprocessing such as convolution may be used. In addition, when the fluorescence compensation is performed, an inverse matrix is calculated, and at this time, the solution may be obtained by using the Gauss-Jordan method. In addition, an algorithm such as normalization may be used as preprocessing for the purpose of suppressing a batch effect.

Next, a plurality of pieces of measurement data included in the population specified in step S135 are divided into a plurality of pieces of measurement data for training and a plurality of pieces of measurement data for validation (step S136).

Next, training is performed using the divided plurality of pieces of measurement data for training and using the fluorescence or image as explanatory variables, and a learning model is generated (step S137). Then, the generated learning model is used to perform estimation of the plurality of pieces of measurement data for validation by using the ground truth and the confidence levels of the estimation of the plurality of pieces of measurement data for validation (step S138).

A threshold value is then set for the estimated confidence levels (step S139). Next, a user checks the values of the purities and efficiencies displayed on the display unit 320, the state of the plots of the measurement data, and the like (step S140), and if the setting of the threshold value is not appropriate (NOT OK in step S140), the processing returns to step S139, and a threshold value is set again.

On the other hand, if the threshold value is appropriately set (OK in step S140), the remaining pieces of measurement data are caused to flow (step S141), and the remaining samples after the remaining samples are measured are sorted into clusters (step S142). Next, the pieces of measurement data to be sorted are sorted based on the confidence levels among the remaining pieces of measurement data included in the classified cluster based on the set threshold value (step S143).

### 3.4. Modifications

The case where the information processing device 600 classifies the remaining pieces of measurement data has been described in the third embodiment, but it takes time to process the classification of the remaining pieces of measurement data and thus the processing may be performed by the measurement device 611.

Fig. 35 is a functional block diagram of an information processing system according to a modification of the third embodiment. Note that the same reference numerals are given to the same components as those in Fig. 30 in the following description. The sorting unit 622 provided in the information processing device 600 may be provided in the measurement device 611 as illustrated in Fig. 35.

The threshold value set by the threshold value setting unit 621 and the clusters subjected to clustering by the dimensionality reduction/clustering unit 615 are output from the information processing device 600 to the measurement device 611 as illustrated in Fig. 35.

The sorting unit 622 of the measurement device 611 receives the threshold value and the clusters subjected to clustering, which have been output from the information processing device 600, and sorts the pieces of measurement data included in the cluster by using the received threshold value.

The information processing system according to the modification of the third embodiment can appropriately perform IFCM-based sorting.

### 4. Hardware Configuration

Fig. 36 is a hardware configuration diagram illustrating an example of a computer that implements a computation device of the information processing device 20, 300, 400, or 600, or the measurement device 311, 411, or 611 according to the embodiments.

A computer 1000 includes a CPU 1100, a RAM 1200, a read only memory (ROM) 1300, a hard disk drive (HDD) 1400, a communication interface 1500, and an input/output interface 1600. The units of the computer 1000 are connected together via a bus 1050.

The CPU 1100 operates on the basis of a program stored in the ROM 1300 or the HDD 1400 and controls each unit. For example, the CPU 1100 loads programs stored in the ROM 1300 or the HDD 1400 onto the RAM 1200 and executes processing operations corresponding to the various programs.

The ROM 1300 stores a boot program such as a basic input output system (BIOS) executed by the CPU 1100 at the time of activation of the computer 1000, a program depending on hardware of the computer 1000, and the like.

The HDD 1400 is a computer-readable storage medium that non-temporarily stores programs executed by the CPU 1100, data used by the programs, and the like. Specifically, the HDD 1400 is a storage medium that stores an application program according to the present disclosure, which is an example of program data 1450.

The communication interface 1500 is an interface for the computer 1000 to connect to an external network 1550 (for example, the Internet). For example, the CPU 1100 receives data from another device via the communication interface 1500 and transmits data generated by the CPU 1100 to another device via the communication interface 1500.

The input/output interface 1600 is an interface for connecting the input/output device 1650 and the computer 1000. For example, the CPU 1100 receives data from an input device such as a keyboard and a mouse via the input/output interface 1600. The CPU 1100 also sends data to an output device such as a display, speakers, a printer, or the like via the input/output interface 1600. The input/output interface 1600 may also function as a media interface that reads a program or the like stored in a predetermined storage medium (media). Examples of the medium or media include an optical recording medium such as a digital versatile disc (DVD) or a phase change rewritable disk (PD), a magneto-optical recording medium such as a magneto-optical disk (MO), a tape medium, a magnetic recording medium, a semiconductor memory, and the like.

Note that the CPU 1100 reads the program data 1450 from the HDD 1400 and executes the program, but in another example, the CPU 1100 may acquire these programs from another device via the external network 1550.

While the preferred embodiments of the present disclosure have been described above in detail with reference to the accompanying drawings, the technical scope of the present disclosure is not limited to such examples. It will be apparent that a person having ordinary knowledge in the technical field of the present disclosure can conceive various modifications and alterations within the scope of the technical ideas described in the claims, and such modifications and alterations are naturally understood to fall within the technical scope of the present disclosure.

Further, the effects described in this specification are merely illustrative or exemplary and are not limited. That is, the technique according to the present disclosure can produce other effects that are apparent to those skilled in the art from the description of this specification, either in addition to or in place of the above-described effects.

Note that the present technology may also adopt configurations as described below.
[1] A biological particle analysis system including:
   an acquisition unit that acquires measurement data measured from biologically derived particles included in a sample;
   a compression unit that performs data compression processing on the measurement data acquired by the acquisition unit;
   a gate unit that gates the measurement data compressed by the compression unit into training-use measurement data and validation-use measurement data, and then adds a label to the training-use measurement data;
   a training unit that builds a learning model by using the training-use measurement data and the label;
   an estimation unit that inputs the validation-use measurement data to the learning model and outputs a confidence level of the validation-use measurement data; and
   a threshold value setting unit that sets, based on the confidence level, a threshold value that is used in sorting the sample.
[2] The biological particle analysis system according to [1], further including:
   a display unit that displays an efficiency and a yield of the biologically derived particles based on the output confidence level and the threshold value.
[3] The biological particle analysis system according to [1] or [2], wherein
   the training-use measurement data and the validation-use measurement data that are included in the measurement data are different from each other.
[4] The biological particle analysis system according to any one of [1] to [3], further including:
   a biologically derived particle sorting device including a determination unit that inputs, to the learning model, measurement data measured from biologically derived particles subject to sorting, infers whether the biologically derived particles subject to sorting are sorting targets, and makes a sorting decision based on the threshold value set by the threshold value setting unit when the biologically derived particles subject to sorting are inferred to be the sorting targets.
[5] The biological particle analysis system according to [4], wherein
   the biologically derived particle sorting device includes a sorting unit that sorts sorting target particles based on the sorting decision by the determination unit.
[6] The biological particle analysis system according to [4], wherein
   the biologically derived particles subject to sorting are included in the sample.
[7] The biological particle analysis system according to any one of [1] to [6], wherein
   a predetermined threshold value is set as the threshold value.
[8] The biological particle analysis system according to [7], wherein
   the predetermined threshold value is determined corresponding to one or more modes.
[9] The biological particle analysis system according to any one of [1] to [6], wherein
   the threshold value is set by a user.
[10] The biological particle analysis system according to any one of [1] to [9], wherein
   the data compression processing is dimensionality reduction, and
   a sorting target range is determined after the dimensionality reduction.
[11] An information processing device including:
   a compression unit that performs data compression processing on measurement data measured from biologically derived particles included in a sample;
   a gate unit that gates the measurement data compressed by the compression unit into training-use measurement data and validation-use measurement data, and then adds a label to the training-use measurement data;
   a training unit that builds a learning model that determines whether the biologically derived particles are sorting targets by using the training-use measurement data and the label;
   an inference unit that inputs the validation-use measurement data to the learning model built by the training unit and then infers whether the validation-use measurement data is the sorting target;
   a confidence level calculation unit that calculates a confidence level of the validation-use measurement data used for the inference; and
   a threshold value setting unit that sets a threshold value that is used in sorting the sample, based on the confidence level calculated by the confidence level calculation unit.
[12] The information processing device according to [11], wherein
   the built learning model is output to a microparticle sorting device.
[13] An information processing method including:
   a compression step of performing data compression processing on measurement data measured from biologically derived particles included in a sample;
   a gate step of gating the measurement data subjected to the data compression processing into training-use measurement data and validation-use measurement data, and then adding a label to the training-use measurement data;
   a training step of building a learning model that determines whether the biologically derived particles are sorting targets by using the training-use measurement data and the label, as training;
   an inference step of inputting the validation-use measurement data to the learning model built in the training step and inferring whether the validation-use measurement data is the sorting target;
   a confidence level calculation step of calculating a confidence level of the validation-use measurement data used in the inferring; and
   a threshold value calculation step of setting a threshold value that is used in sorting the sample based on the confidence level calculated in the confidence level calculation step.
[14] The information processing method according to [13], further including:
   a step of measuring the measurement data by using a microparticle analysis device.
[15] The information processing method according to [14], further including:
   a step of inputting, to the learning model built in the training, optical information measured from biologically derived particles subject to sorting by the microparticle analysis device, inferring whether the biologically derived particles subject to sorting are sorting targets, and making a sorting decision based on the threshold value set in the threshold value setting when the biologically derived particles subject to sorting are inferred to be the sorting targets.
[16] The information processing method according to [15], further including:
   a step of sorting sorting target particles based on the sorting decision.
[17] An information processing device including:
   an acquisition unit that acquires a plurality of pieces of measurement data including optical information measured from biologically derived particles included in a sample;
   a clustering unit that classifies the plurality of pieces of measurement data acquired by the acquisition unit into a plurality of clusters;
   a cluster selection unit that selects a cluster as a sorting target from the clusters classified by the clustering unit; and
   a threshold value setting unit that sets a threshold value based on a plurality of the pieces of measurement data included in the cluster selected by the cluster selection unit.
[18] The information processing device according to [17], wherein
   the clustering unit classifies the plurality of pieces of measurement data acquired by the acquisition unit into clusters; and
   the information processing device further includes a sorting unit that sorts pieces of the measurement data to be sorted among the plurality of pieces of measurement data included in the clusters classified by the clustering unit based on the threshold value set by the threshold value setting unit.
[19] The information processing device according to [17] or [18], wherein
   the threshold value setting unit sets a threshold value corresponding to a representative value of the cluster or the threshold value corresponding to a median value of the plurality of the pieces of measurement data included in the cluster selected by the cluster selection unit.

### Reference Signs List

300, 400, 600 Information processing device
311, 411, 611 Measurement device
312, 412, 612 Acquisition unit
313, 413, 613 Preprocessing unit
314 Dimensionality reduction unit
315 Gate unit
316 Division unit
317, 618 Training unit
318, 619 Estimation unit
319, 417, 621 Threshold value setting unit
320, 416, 620 Display unit
321, 418, 622 Sorting unit
414 Class formation and clustering unit
415 Cluster selection unit
614 Determination unit
615 Dimensionality reduction/clustering unit
616 Population specification unit

## Claims

1. A biological particle analysis system comprising:
an acquisition unit that acquires measurement data measured from biologically derived particles included in a sample;
a compression unit that performs data compression processing on the measurement data acquired by the acquisition unit;
a gate unit that gates the measurement data compressed by the compression unit into training-use measurement data and validation-use measurement data, and then adds a label to the training-use measurement data;
a training unit that builds a learning model by using the training-use measurement data and the label;
an estimation unit that inputs the validation-use measurement data to the learning model and outputs a confidence level of the validation-use measurement data; and
a threshold value setting unit that sets, based on the confidence level, a threshold value that is used in sorting the sample.

2. The biological particle analysis system according to claim 1, further comprising:
a display unit that displays an efficiency and a yield of the biologically derived particles based on the output confidence level and the threshold value.

3. The biological particle analysis system according to claim 1, wherein
the training-use measurement data and the validation-use measurement data that are included in the measurement data are different from each other.

4. The biological particle analysis system according to claim 1, further comprising:
a biologically derived particle sorting device including a determination unit that inputs, to the learning model, measurement data measured from biologically derived particles subject to sorting, infers whether the biologically derived particles subject to sorting are sorting targets, and makes a sorting decision based on the threshold value set by the threshold value setting unit when the biologically derived particles subject to sorting are inferred to be the sorting targets.

5. The biological particle analysis system according to claim 4, wherein
the biologically derived particle sorting device includes a sorting unit that sorts sorting target particles based on the sorting decision by the determination unit.

6. The biological particle analysis system according to claim 4, wherein
the biologically derived particles subject to sorting are included in the sample.

7. The biological particle analysis system according to claim 1, wherein
a predetermined threshold value is set as the threshold value.

8. The biological particle analysis system according to claim 7, wherein
the predetermined threshold value is determined corresponding to one or more modes.

9. The biological particle analysis system according to claim 1, wherein
the threshold value is set by a user.

10. The biological particle analysis system according to claim 1, wherein
the data compression processing is dimensionality reduction, and
a sorting target range is determined after the dimensionality reduction.

11. An information processing device comprising:
a compression unit that performs data compression processing on measurement data measured from biologically derived particles included in a sample;
a gate unit that gates the measurement data compressed by the compression unit into training-use measurement data and validation-use measurement data, and then adds a label to the training-use measurement data;
a training unit that builds a learning model that determines whether the biologically derived particles are sorting targets by using the training-use measurement data and the label;
an inference unit that inputs the validation-use measurement data to the learning model built by the training unit and then infers whether the validation-use measurement data is the sorting target;
a confidence level calculation unit that calculates a confidence level of the validation-use measurement data used for the inference; and
a threshold value setting unit that sets a threshold value that is used in sorting the sample, based on the confidence level calculated by the confidence level calculation unit.

12. The information processing device according to claim 11, wherein
the built learning model is output to a microparticle sorting device.

13. An information processing method comprising:
a compression step of performing data compression processing on measurement data measured from biologically derived particles included in a sample;
a gate step of gating the measurement data subjected to the data compression processing into training-use measurement data and validation-use measurement data, and then adding a label to the training-use measurement data;
a training step of building a learning model that determines whether the biologically derived particles are sorting targets by using the training-use measurement data and the label, as training;
an inference step of inputting the validation-use measurement data to the learning model built in the training step and inferring whether the validation-use measurement data is the sorting target;
a confidence level calculation step of calculating a confidence level of the validation-use measurement data used in the inferring; and
a threshold value calculation step of setting a threshold value that is used in sorting the sample based on the confidence level calculated in the confidence level calculation step.

14. The information processing method according to claim 13, further comprising:
measuring the measurement data by using a microparticle analysis device.

15. The information processing method according to claim 14, further comprising:
a step of inputting, to the learning model built in the training, optical information measured from biologically derived particles subject to sorting by the microparticle analysis device, inferring whether the biologically derived particles subject to sorting are sorting targets, and making a sorting decision based on the threshold value set in the threshold value setting when the biologically derived particles subject to sorting are inferred to be the sorting targets.

16. The information processing method according to claim 15, further comprising:
a step of sorting sorting target particles based on the sorting decision.

17. An information processing device comprising:
an acquisition unit that acquires a plurality of pieces of measurement data including optical information measured from biologically derived particles included in a sample;
a clustering unit that classifies the plurality of pieces of measurement data acquired by the acquisition unit into a plurality of clusters;
a cluster selection unit that selects a cluster as a sorting target from the clusters classified by the clustering unit; and
a threshold value setting unit that sets a threshold value based on a plurality of the pieces of measurement data included in the cluster selected by the cluster selection unit.

18. The information processing device according to claim 17, wherein
the clustering unit classifies the plurality of pieces of measurement data acquired by the acquisition unit into clusters; and
the information processing device further comprises a sorting unit that sorts pieces of the measurement data to be sorted among the plurality of pieces of measurement data included in the clusters classified by the clustering unit based on the threshold value set by the threshold value setting unit.

19. The information processing device according to claim 17, wherein
the threshold value setting unit sets a threshold value corresponding to a representative value of the cluster or the threshold value corresponding to a median value of the plurality of the pieces of measurement data included in the cluster selected by the cluster selection unit.
